(19) Europäisches Patentamt
European Patent Office
Office européen des brevets

(11) **EP 4 504 380 B1**

(12) **EUROPEAN PATENT SPECIFICATION**

(45) Date of publication and mention
of the grant of the patent:
**12.11.2025 Bulletin 2025/46**

(21) Application number: **23720392.2**

(22) Date of filing: **24.04.2023**

(51) International Patent Classification (IPC):
***B01D 46/121*** *(2022.01)*

(52) Cooperative Patent Classification (CPC):
**B01D 46/121; B01D 46/0041**

(86) International application number:
**PCT/NL2023/050218**

(87) International publication number:
**WO 2023/204715 (26.10.2023 Gazette 2023/43)**

(54) **V-BANK FILTER**

V-BANKFILTER

FILTRE À BANCS EN V

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.04.2022 NL 2031675**

(43) Date of publication of application:
**12.02.2025 Bulletin 2025/07**

(73) Proprietor: **Afpro Filters B.V.
1822 BN Alkmaar (NL)**

(72) Inventor: **ZHUO, Yanbin
5642 RX Eindhoven (NL)**

(74) Representative: **Arnold & Siedsma
Bezuidenhoutseweg 57
2594 AC The Hague (NL)**

(56) References cited:
**CN-A- 112 957 835      US-A1- 2009 193 773
US-A1- 2011 277 430**

EP 4 504 380 B1

**Description**

**FIELD OF THE DISCLOSURE**

The present disclosure generally relates to a system, method and apparatus comprising a low flow resistance compact filter having a streamlined curved design at the filter inlet side of the filter housing and configured with a plurality of filter elements for efficient airflow performance during usage of the filter.

**BACKGROUND**

Filters are ideally used for helping to create a clean room environment for many types of industries and residences. V-Bank filters are commonly used in air filtration applications where large amounts of filtration media is desirable, typically to provide improved pressure drop over deep-pleated filters at high airflow rates. Such filters are used in HVAC applications as high-efficiency filters in industrial, commercial, medical and institutional applications to improve indoor air quality and comfort.

Generally, conventional V-Bank filters are designed for a low-pressure drop in airflow, thereby allowing organizations to reduce energy consumption by using such filters. V-Bank filters are commonly used in air filtration applications where large amounts of filtration media are desirable, typically to provide improved pressure drops over deep-pleated filters at high airflow rates. A V-Bank filter typically includes two or more pairs of filter banks arranged in a V-configuration. Each bank comprises a filter element defined as a filter media (to deal with substance, which needs to be removed from the air) surrounded by a frame and disposed within and attached to the frame. Further, it is ideal that airflow passing through the V-Bank filter provides and maintains high air quality for indoor environments. In addition, V-Bank filters can be made of synthetic or glass-based material and any natural or man-made materials, wood, plastics or other similar materials making the V-Bank filter easy to carry and install at any location. Finally, the V-Bank filter is generally designed in a rigid construction that it is able to tolerate a wide range of air velocity ensuring optimum performance even under significant load changes during operation of the filter.

The publication CN 112 957 835 A presents a V-shaped filter with a square frame-shaped outer frame flange, wherein two side walls of the outer frame flange are connected with symmetrical support frames. Said support frames include a plurality of symmetrical trapezoidal plates each with a fixed V-shaped groove on its inner side for a replaceable filter element. The bottom ends of the symmetrical trapezoidal plates are fixedly connected with a bottom plate at both sides, while the top of the V-shaped groove on the inner side of the symmetrical trapezoidal plate is detachably connected with the cover plate. The two sides of the filter element are respectively connected to the V-shaped grooves of the trapezoidal plates on both sides and the top and bottom ends of the filter element are respectively connected with the cover plate and the bottom plate. The plurality of continuous trapezoidal plates in the support frame are arranged in an arc shape. The angle between the trapezoid plates in the frame can be adjusted. The publication US 2009-0193773 A1 presents a V-bank air filter including a housing having a first pair and a second pair of pleated filter elements arranged in a vee configuration and comprising a unitary disposable filter. A centerline defined by the first pair of pleated filter elements defines an acute angle with a centerline defined by the second parr of pleated filter elements. The publication US 2011/0277430 A1 presents a filter media pleat pack retention that is attained by providing a filter media pleat pack having a joining member located between a first filter media portion and a second filter media portion. The first filter media portion is coupled to the joining member at one side and the second filter media portion is coupled to the joining member at an opposite side.

Conventional and prior art V-Bank filters have multiple disadvantages. One key disadvantage in prior art V-Bank filters is the lack of streamlined curved designs based on design parameters obtained from the results of computational fluid dynamics (CFD) analysis. The other disadvantage is the generation of sudden large velocity gradients around the pleat of the filter media disposed within a filter element. Such sudden large velocity gradients around the filter elements can produce significant turbulent effects as the airflow is flowing through the filter housing causing performance inefficiencies during usage of the filter. In addition, such acceleration issues can further increase the operational costs associated with filtering air.

Therefore, there is clearly a market need for a low flow resistance V-Bank compact filter having a streamlined curved design at the air intake side and configured with a plurality of filter elements for optimum and efficient airflow performance during usage of the filter. In addition, such an improved low flow resistance V-Bank compact filter can be configured to achieve lower pressure drop and lower energy consumption during usage of the filter.

The present disclosure is directed to a system, apparatus and method comprising such an improved low flow resistance V-Bank compact filter having a streamlined curved design at the air intake side and configured with a plurality of filter elements for efficient airflow performance during usage of the filter.

## SUMMARY

The scope of protection for the present invention is defined in claim 1, directed to a filter assembly, and in claim 11 directed to a method of manufacturing a filter assembly. For the purposes of promoting and understanding the principles disclosed herein, reference is now made to the preferred embodiments illustrated in the drawings, and specific language is used to describe the same. It is nevertheless understood that no limitation of the scope of the invention is hereby intended. Such alterations and further modifications in the illustrated devices and such further applications of the principles disclosed and illustrated herein are contemplated as would normally occur to one of ordinary skill in the art to which this disclosure relates. Embodiments disclosed in the present disclosure provide a system, a method and an apparatus comprising a low flow resistance V-Bank compact filter having a streamlined curved design at the air intake side and configured with a plurality of filter elements for efficient airflow performance during usage of the filter.

A V-Bank filter (VBF) having a filter assembly comprises (1) a housing including a pair of opposing side panels which comprises a first side panel and a second side panel, (2) a pair of end channels wherein each end channel is contiguous with and extends between the opposing side panels such that the end channels are connected to the first and second side panels, (3) a plurality of end caps wherein each end cap is contiguous with and extends between the opposing side panels such that the end channels are connected to the first and second side panels, (4) a plurality of back support members each connected to the first and second side panels and (5) a plurality of filter elements wherein each filter element is contiguous with and extends between the opposing side panels - the plurality of filter elements arranged to define a plurality of vee pairs such that each vee pair include a pair of filter elements. The opposing first and second side panels further includes a front portion having an outer edge and a side panel contoured surface extending from the outer edge to an inner edge. Each end channel of the filter assembly further comprises a first edge and an end channel contoured surface extending from the first edge to a second edge of the end channel. Each end cap of the filter assembly further comprises a first edge and an end cap contoured surface having a curvature extending from the first edge of the end cap to a second edge of the end cap such that each end cap contoured surface is defined by at least two curves, each curve having a different control equation from the other curve. A pair of vee pairs including a first vee pair having a first filter element and a second filter element, and a second vee pair having a third filter element and a fourth filter element. Each filter element of each vee pair has a lateral axis extending through the filter element from the front portion to the back support disposed at an orientation relative to a flow direction of an airflow through the housing such that the lateral axis of each filter element is non-parallel with respect to the lateral axis of each of the other filter element. In addition, a bisecting centerline - a centerline defined between the lateral axis of each filter element of the vee pair - is oriented non-parallel with respect to the bisecting centerline of each other vee pair such that the lateral axes of the pair of filter elements of the vee pair covered by one of the end caps are disposed at a different angle relative to the flow direction of the airflow.

As disclosed herein, in the VBF filter assembly, the control equation's coefficients for each curve defining the contoured surfaces at the filter inlet side of the housing -the side panel contoured surface, the end channel contoured surface and the end cap contoured surface are dependent on the angle of the lateral axis of one of the filter element at which the filter element is disposed relative to the flow direction. Further, the curvature of each of the end cap contoured surfaces at the filter inlet side ensures that air can flow past a certain pre-determined point at the filter inlet side without generating any separate flow layer until the air reaches the plurality of filter elements. The plurality of filter elements comprising at least two pairs of vees includes at least four separate filter elements arranged in two pairs of vees extending between the first and second panels.

In another embodiment, a plurality of filter elements are coupled to the housing of the VBF in at least four pairs of vees. The plurality of filter elements comprising at least four pairs of vees includes at least eight separate filter elements arranged in four pairs of vees are contiguous with and extends between the opposing first and second panels. Each of the elongated tubular end channels includes a partially contoured main body having a first edge and a surface - the end channel contoured surface - that extends from the first edge to a second edge main body coupled at a first and a second end to the first and second side panels, respectively, at the filter inlet side of the housing. The end channel contoured surface extending from the first edge to the second edge of the end channel has a curved-shaped contour facing the air intake side of the filter housing. The end channel contoured surface for each end channel is defined by a streamlined 1st curve and the side panel contoured surface contour for the opposing side panels - the first and second side panels - are defined by a 2nd curve.

A first pair of filter elements from the plurality of the filter elements are arranged in a first vee pair, a second pair of filter elements are arranged in a second vee pair, a third pair of filter elements are arranged in a third vee pair, while a fourth pair of filter elements are arranged in a fourth vee pair within the filter housing. A first filter element and a second filter element from the plurality of filter elements are configured to form a first vee pair wherein the first vee pair defines a bisecting centerline that is oriented at a certain angle from the centerline of the first filter element and extends in a direction from an inlet end to an outlet end of the filter housing. A third filter element and a fourth filter element from the plurality of filter elements are configured to form a second vee pair wherein the second vee pair defines a bisecting centerline that is oriented at a certain angle from the centerline of the third filter element and extends in a direction from an inlet end to an outlet end of the filter housing. A fifth filter element and a sixth filter element from the plurality of filter elements are configured to form a third vee pair, wherein the third vee pair defines a bisecting centerline that is oriented at a certain angle from the centerline of the fifth filter element and extends in a direction from an inlet end to an outlet end of the filter housing. A seventh filter element and an eighth filter element from the plurality of filter elements are configured to form a fourth vee pair, wherein the fourth vee pair defines a bisecting centerline that is oriented at a certain angle from the centerline of the seventh filter element and extends in a direction from an inlet end to an outlet end of the filter housing. Various embodiments of a number of vees-for instance, a filter comprising 2 vee pairs, 3 vee pairs, 5 vee pairs or any other number of vee pairs and variations-fall within the scope of the disclosure.

A plurality of tubular end caps are disposed in the vertices of each pair of filter elements. Each tubular end cap includes an elongated main body having a first edge and an end cap contoured surface that extends from the first edge to a second edge, main body coupled at a first and a second end to the first and second side panels, respectively, at the filter inlet side of the housing. The end cap contoured surface extending from the first edge to the second edge of the end cap has a curved shaped contour facing the air intake side of the filter housing, the end cap further having opposing lips defining a channel wide enough to accommodate the ends of the filter elements comprising the vee pair. The housing, side panels, plurality of back support structures, front support structures having end channels and end caps, along with the plurality of filter elements, comprises a unitary disposable V-Bank filter, as further disclosed herein.

In another embodiment, the streamlined curve shape of the surface contour for each end cap has a curvature calculated based on results generated from a CFD flow optimization program (e.g., calculations obtained from a finite element-based analysis tool, including parameters for failure criteria and geometry optimization based on CFD analysis). The surface contour for each of the end caps covering the vee pairs are defined by curvature formed along portions of the surface contour of the end caps as follows: (1) a first end cap contoured surface defined by a first curvature that is formed by joining end points of a $3^{rd}$ curve and a $4^{th}$ curve, wherein the control equation of curvature of the $3^{rd}$ curve is different from the control equation of curvature of the $4^{th}$ curve, wherein the $3^{rd}$ curve and the $4^{th}$ curve are preferably generated from a CFD flow optimization program , the first end cap contoured surface covering a set of filter elements from the first vee pair and the second vee pair; (2) a second end cap contoured surface defined by a second curvature that is formed by joining end points of a 5th curve and a 6th curve, wherein the control equation of curvature of the 5th curve is different from the control equation of curvature of the 6th curve, wherein the 5th curve and the 6th curve are preferably generated from a CFD flow optimization program, the second end cap contoured surface covering filter elements from the second vee pair and the third vee pair; and (3) a third end cap contoured surface defined by a third curvature that is formed by joining end points of a 7th curve and a 8th curve, wherein the control equation of curvature of the 7th curve is different from the control equation of curvature of the 8th curve, wherein the 7th curve and the 8th curve are preferably generated from a CFD flow optimization program , the third end cap contoured surface covering filter elements from the third and fourth vee pairs. The curvature radii for the 3rd, 4th and 5th curves are calculated and optimized based on results generated from a CFD flow optimization program and the first curvature and third curvature are mirror images of each other about a plane of symmetry disposed midway between the first and the third curvatures. The remaining 6th, 7th and 8th curves have the same curvature radii of the 3rd, 4th and 5th curves, respectively.

In another embodiment, a method of manufacturing a filter assembly, comprises: (1) providing a housing including a pair of opposing side panels, wherein each of the opposing side panels includes a front portion having an outer edge and a side panel contoured surface extending from the outer edge to an inner edge; (2) connecting a plurality of back support members each connected to the ends of the opposing side panels; (3) connecting a pair of end channels to the opposing side panels such that each end channel is contiguous with and extends between the opposing side panels, wherein each end channel has a first edge and an end channel contoured surface extending from the first edge to a second edge of the end channel; (4) connecting a plurality of end caps to the opposing side panels such that each end cap is contiguous with and extends between the opposing side panels, wherein each end cap has a first edge and an end cap contoured surface extending from the first edge of the end cap to a second edge of the end cap and wherein each end cap contoured surface is defined by at least two curves, wherein each curve has a different control equation from the other curve; (5) connecting a plurality of filter elements to the opposing side panels such that each filter element is contiguous with and extends between the opposing side panels, wherein the plurality of filter elements are arranged to define a plurality of vee pairs such that each vee pair include a pair of filter elements.

As disclosed herein, the method further comprises the steps of orienting each filter element such that (1) a lateral axis extending through the filter element from the front portion to the back support is disposed non-parallel with respect to the lateral axis of each of the other filter element; and (2) a bisecting centerline defined between the lateral axis of each filter element of the vee pair is oriented non-parallel with respect to the bisecting centerline of each other vee pair such that the lateral axes of the pair of filter elements of the vee pair covered by one of the end caps are disposed at a different angle relative to the flow direction of the airflow, and wherein the control equation's coefficients for each curve defining the curvature of the end cap contoured surface are dependent on the angle of the lateral axis of one of the filter element at which the filter element is disposed relative to the flow direction.

The streamlined curved shape at the air intake side of the filter forms an aerodynamic shape designed to optimize and improve flow patterns in and around the various filter elements during usage of the filter. In the filter assembly disclosed herein, the curvature of the each end cap contoured surface for each end cap is further optimized to improve flow patterns of the airflow in and around the various filter elements by averaging the flow velocity through the plurality of filter elements during use. Further, as disclosed in the detailed description, the configuration and arrangement of the filter elements disposed within the filter housing can increase the effective area of filtration which improves the flow uniformity and utilization of filter material. For instance, during usage of the filter, the velocity of the airflow at different points along the filter elements will vary based on the orientation of each filter element within the filter housing. The different configurations of the vees can further average the flow through the filter elements for a certain given airflow rate.

The design and configuration of the filter-the end cap and end channel contoured surfaces at the filter inlet side in conjunction with the orientation of the filter elements- reduces both (a) the maximum velocity of the airflow exiting the filter housing at the filter outlet side-; and (b)t sudden large velocity gradients around the filter elements and preventing significant turbulent effects as the airflow is flowing through the filter housing.

The novel combination of (a) the curved surface contours (streamlined curved designs) at the filter inlet or air intake side of the filter and (b) the specific arrangement and configuration of the plurality of filter elements works in conjunction to create a filter with lower pressure drop via an efficient airflow performance during usage, lower energy consumption and ensures optimum performance even under significant load changes during operation of the filter.

This summary is provided to introduce a selection of concepts in a simplified form that are further described in the detailed description of the disclosure. This summary is not intended to identify key or essential inventive concepts of the claimed subject matter, nor is it intended for determining the scope of the claimed subject matter. The references made above in detail to the embodiments of the disclosure are provided by way of explanation of the disclosure, not in limitation of the disclosure. It will be apparent to those skilled in the art that various modifications and variations can be made in the present disclosure without departing from the scope or spirit of the disclosure.

Features illustrated or described as part of one embodiment can be used on another embodiment to yield a still further embodiment. Thus, it is intended that the present disclosure cover such modifications and variations as come within the scope of the appended claims and their equivalents. Other objects, features and aspects of the present disclosure are disclosed in the following detailed description. It is to be understood by one of ordinary skill in the art that the present discussion is a description of exemplary embodiments only and is not intended as limiting the broader aspects of the present disclosure, which broader aspects are embodied in the exemplary constructions.

## BRIEF DESCRIPTION OF THE DRAWINGS

The disclosure will be more readily understood in view of the following description when accompanied by the drawings. The accompanying figures incorporated in and forming a part of the specification illustrate several aspects of the present disclosure and, together with the description, serve to explain the principles of the invention.

FIG. 1 illustrates the components of the VBF housing disclosed herein.

FIGS. 2 and 3 illustrate the arrangement of the plurality of filter elements for a as disclosed herein.

FIGS. 4A-4B illustrate the various configurations for the curve shaped design at the filter inlet side of the VBF as disclosed herein.

FIG. 5 illustrates the 2D CFD domain used for the performance simulation for a VBF as disclosed herein.

FIG. 6 illustrates the comparison of the different curve scenarios for the curve-shaped design and the filter elements of the VBF disclosed herein.

FIGS. 7A, 7B and 7C illustrate the arrangement of the filter elements comprising 3 vees, 4 vees and 5 vees as disclosed herein.

FIG. 8 illustrates the edge-shaped design to induce air into the filter frame housing of the VBF disclosed herein.

FIG. 9 illustrates the 3D CFD domain used to simulate a standard test rig's performance on pressure drop measurement and visualize the velocity field within the VBF disclosed herein.

FIG. 10 illustrates the various speed contours (four scenarios) of the airflow based on CFD simulation of the VBF disclosed herein.

FIG. 11 illustrates the performance of different VBFs, including the invention disclosed herein, when tested in accordance with ISO16890.

## DETAILED DESCRIPTION OF THE DISCLOSURE

For the purposes of promoting and understanding the principles disclosed herein, reference is now made to the preferred embodiments illustrated in the drawings, and specific language is used to describe the same. It is understood that no limitation of the scope of the disclosure is hereby intended. Such alterations and further modifications in the illustrated apparatus and such further applications of the principles disclosed and illustrated herein are contemplated as would normally occur to one of ordinary skill in the art to which this disclosure relates. The apparatus disclosed herein provides significant performance improvements than currently available filters in the marketplace and reduces the operational costs compared to conventional filter designs.

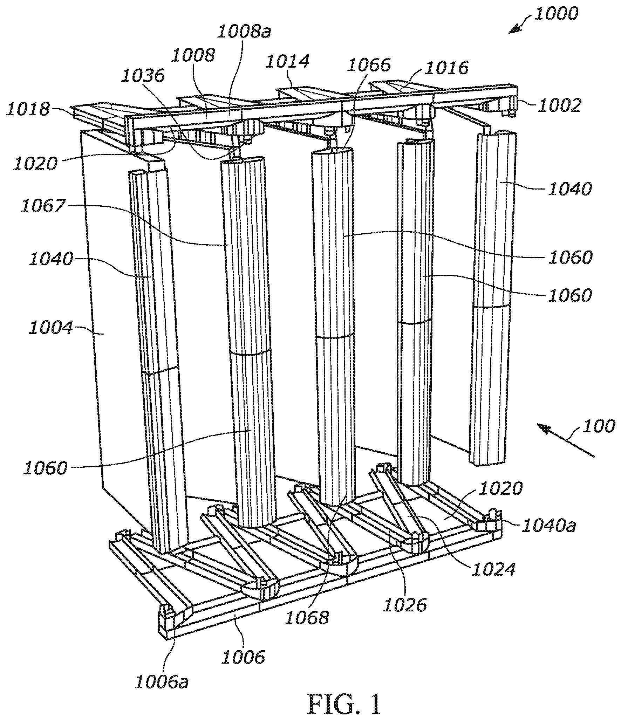

FIG. 1 is an exploded isometric view of one embodiment of a V-Bank filter 1000. The airflow direction through the filter is indicated by arrow 100. The direction of the arrow 100 is oriented as v-type filters are typically utilized, but it is contemplated that flow direction through the filter 100 may be in the reverse direction. The V-Bank filter includes a housing 1002 containing a plurality of filter elements 1004. In one embodiment, the housing 1002 and filter elements 1004 comprise a unitary replaceable filter having a filter inlet located at an upstream end of the housing 1002 (the air intake side of the filter) and a filter outlet located at a downstream end of the housing 1002 (the air exiting side of the filter). The filter element 1004 may be suitable for at least one of liquid phase, gas phase, particulate or molecular filtration media, such as a bed of carbon or other gas phase absorber.

As illustrated, the filter housing 1002 comprises a first side panel 1006 coupled to a second side panel 1008 in a spaced apart relation by a pair of end channels. As depicted in this embodiment, each of the first and second panels (1006, 1008) includes a front portion having an outer edge and a side panel contoured surface extending from the outer edge to an inner edge. Each side panel contoured surface has a contour defined by a certain curvature and oriented perpendicular to a flow direction 100 through the filter at the filter inlet side of the VBF 1000. The side panels 1006, 1008 may be horizontal or vertical side panels (or plates) depending on the orientation of the filter housing 1002. The side panels 1006, 1008 may be fabricated from metal, wood, plastic, polymer or other equivalent material providing sufficient structural integrity.

The filter element 1004 generally has, but is not limited to, a rectangular form (as shown in FIG.1). Each filter element 1004 may be a pleated pack of filtration media; for instance, glass-based media or suitable synthetic media. The filtration media may include antibacterial, antifungal, gas phase absorbent or other additive. The panels 1006, 1008 further include a set of edges 1014 (located at the filter outlet side of the VBF) and configured in a plurality of v-shaped extensions 1016 which accommodate a portion of the filter elements 1004. The edges 1014 defined by connecting the ends of the v-space extensions 1016 are substantially parallel to the front (1006a, 1008a) of the side panels.

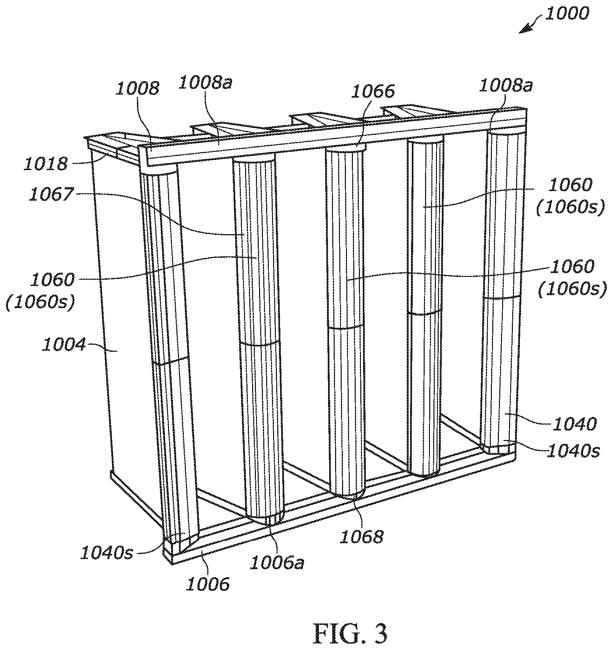

The VBF side panels 1006, 1008 include an exterior side 1018 and an interior side 1020 as shown in FIGS. 1-3. The interior side 1020 of each panel 1006, 1008 faces the filter elements 1004 and includes a pair of spaced grooves for embedding filter elements 1024, 1026 at least partially arranged in an accordion fashion to maintain at least two pairs of the filter elements 1004 in at least two banks of vees, thereby forming four V-Banks 2001, 2002, 2003, 2004, as illustrated in FIGS. 1-3-a 4VBF 1000. As shown, the grooves 1024, 1026 for embedding filter elements generally define a trough - which retains the ends of the filter elements 1004.

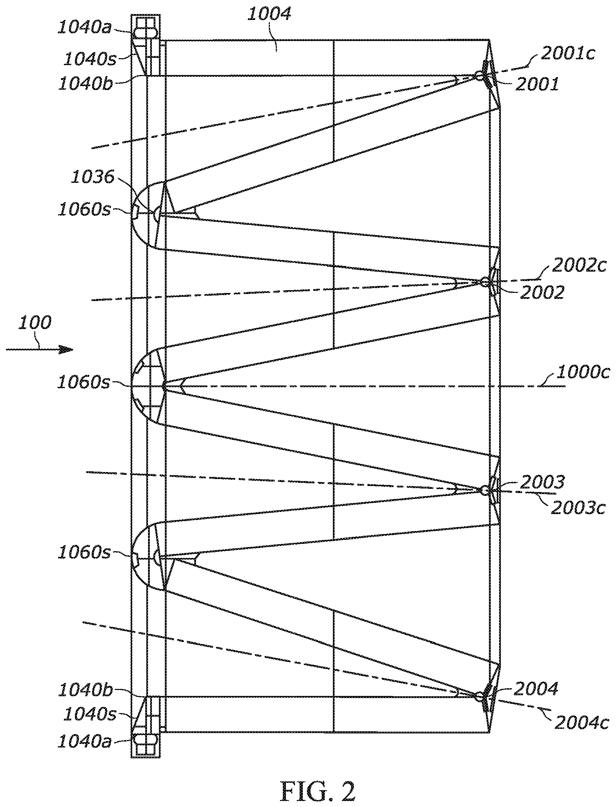

As further illustrated in FIGS. 1 and 2, each of the elongated tubular end channel 1040 has a partially contoured main body 1041 having a first edge 1040a and an end channel contoured surface (1040s) that extends from the first edge 1040a to a second edge 1040b - the inner edge 1040b and the first edge 1040a further defining a groove 1043 for embedding filter elements and wide enough to accept at least one filter element 1004 (as shown). The surface extending from the first edge to the second edge of the end channel is a curved-shaped end channel contoured surface 1040s facing the air intake side of the filter housing 1002. The end channel 1040 oriented perpendicular to the direction of the airflow 100 is coupled at a first end 1042 and a second end 1044 to the first and second side panels 1006, 1008, respectively, at the filter inlet side of the VBF. For instance, at least one filter element 1004 from vee 2001 and at least one filter element 1004 from 2004 are captured within the groove 1024, 1026 for embedding filter elements of the end channel 1040. The end channel 1040 may be fabricated from metal, plastic, wood or other suitable material. Each end channel 1040 further includes a female feature that accepts a mating male feature of the side panels. The male feature may be a tab or other shape/profile projecting from the panel suitable for engaging the female feature.

The filter elements 1004 are arranged in at least two pairs of vees. In the embodiment depicted in FIGS. 1-2, a pair of filter elements 1004 are arranged in a first vee 2001, a second pair of filter elements are arranged in a second vee 2002, a third pair of filter elements are arranged in a third vee 2003 and a fourth pair of filter elements are arranged in a fourth vee 2004. As depicted, the formation of the third vee 2003 and the fourth vee 2004 are mirror images of the second vee 2002 and the first vee 2001, respectively.

An end cap 1060 is disposed in the vertices of each pair of filter elements forming the first, second, third and fourth vees (2001, 2002, 2003 and 2004). As further illustrated in FIGS. 1-3, a plurality of tubular end caps 1060 is disposed in the vertices of each pair of filter elements, each end cap 1060 having a first edge and an end cap contoured surface 1060s that extends from the first edge to a second edge. The end cap contoured surface 1060s extending from the first edge to the second edge has a curved-shaped contour-contour defined by a certain curvature-facing the air intake side (filter inlet side) and oriented perpendicular to a flow direction 100. Each end cap 1060 further comprises opposing lips 1066, 1068 defining a channel 1067 wide enough to accommodate the ends of the filter elements 1004 while narrow enough to fit within the trough 1036 of the side panels adjacent to the groove 1022 for embedding filter elements comprising the vee pairs 2001, 2002, 2003 and 2004. The curvature for the streamlined curved shape of the end cap contoured surface 1060s is based on results generated from a CFD flow optimization program (e.g., calculations obtained from finite element-based analysis tool, including parameters for failure criteria and geometry optimization based on CFD analysis), as further detailed below.

As illustrated in FIGS. 1-3, the combination of (a) the side panels, end channels and end caps contoured surfaces at the air intake side (1006s, 1008s, 1040s and 1060s) and (b) the specific arrangement and configuration of the plurality of filter elements in vees 2001, 2002, 2003 and 2004 work in conjunction to provide an efficient airflow performance during usage of the filter, as further detailed below. The streamlined curved shape at the air intake side of the filter forms an aerodynamic shape designed to optimize and improve flow patterns in and around the various filter elements during usage of the filter. The side panels, end channels and end caps contoured surfaces at the air intake side (1006s, 1008s, 1040s and 1060s) are based on results obtained from a CFD flow optimization program. For instance, and as illustrated in FIGS. 1-2, the end channel contoured surface 1040s for the end channels 1040 is defined by a streamlined 1st curve and the side panel contoured surfaces 1006s, 1008s for the side panels 1006, 1008 are defined by a 2nd curve.

As will be appreciated, due to limitation of installation space and size of the flange of the filter housing, the 1st and 2nd curves of the respective surface contours are fixed and are not varied based on results of the CFD optimization program. As further illustrated, the radii of curvature for the end cap contoured surface 1060s for each of the end caps 1060 covering the vees are defined as follows: (1) a 3rd curve and a 4th curve generated from the CFD optimization program forms the end cap contoured surface 1060s for the end cap 1060 covering filter elements 1004 from the vees 2001 and 2002; (2) a 5th curve and a 6th curve generated from the CFD optimization program forms the end cap contoured surface 1060s for the end cap 1060 covering filter elements 1004 from the vees 2002 and 2003; and (3) a 7th curve and an 8th curve generated from the CFD optimization program forms the end cap contoured surface 1060s for the end cap 1060 covering filter elements 1004 from the vees 2003 and 2004. The curvature radii for the 3rd, 4th and 5th curves are calculated and optimized based on results generated from a CFD flow optimization program. The 6th, 7th and 8th curves have the same curvature radii of the 3rd, 4th and 5th curves, respectively.

The relationship between the vees and the curves are as follows: the first vee 2001 comprises the 1st (the 1st curve formed at the first end channel 1040 coupled to each of the first and second side panels 1006, 1008) and the 3rd curve, the second vee 2002 comprises the 4th and 5th curves, the third vee 2003 comprises the 6th and 7th curves; and the fourth vee 2004 comprises the 8th and 1st curve (the 1st curve formed at the second end channel 1040 coupled to each of the first and second side panels 1006, 1008).

In other words, the 3rd curve is a mirror (having the same curvature) of the 7th curve and the 4th curve is a mirror (having the same curvature) of the 6th and 8th curves of the VBF 100. Such CFD-based streamlined curves at the air intake side of the filter-at the filter inlet side-preclude sudden large localized acceleration or changes in velocity gradients of the flow at the air intake side and/or exiting the filter. The radii of curvature of the 3rd, 4th and 5th curves are calculated using a CFD optimization program, as discussed below. In addition, as noted above, the 1st and 2nd curves do not have any material effect on the overall pressure drop during operation of the filter.

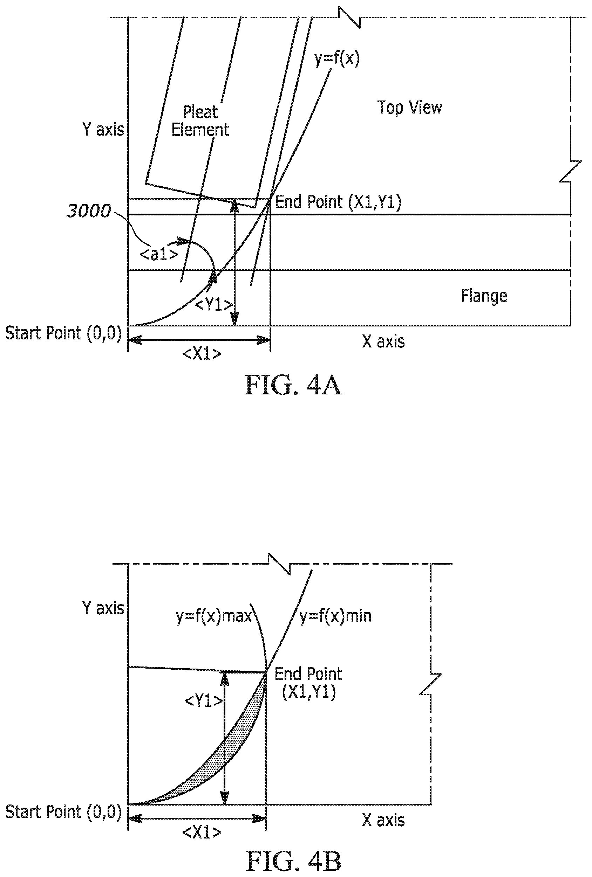

The vee pairs are oriented in a certain configuration within the filter housing 1002. For instance, each vee pair 2001, 2002, 2003 and 2004 has a bisecting centerline 2001c, 2002c, 2003c and 2004c defined midway between the filter elements 1004 that comprise the respective vee pair. As further illustrated, the outer centerlines 2001c, 2004c are oriented at an acute angle relative to a centerline 1000c of the filter 1000. The centerline 1000c of the filter 1000 is generally aligned with the flow direction indicated by arrow 100 and perpendicular to the front longitudinal bars 1006a, 1008a. During usage of the filter, the airflow around the plurality of the filter elements can be further optimized by reorienting the vee pairs and the corresponding angles between the outer centerlines 2001c, 2004c and the centerline of the filter elements 1004. The CFD flow optimization program controls and generates the most optimum radii of curvature for certain surface contours at the intake side of the filter housing as illustrated in FIGS. 4-6, 9 and 10.

In summary, the CFD-based streamlined curved design of the VBF 1000 at the air intake side (the surface contours and the 1st through 8th curves) avoids big local acceleration of flow and optimizes and improves flow pattern when the filter is in usage. In addition, the specific arrangement and configuration of the filter elements in combination streamlines curve design of the VBF 1000 at air intake side prevent the generation of sudden large localized acceleration of the airflow through the VBF, as further discussed below.

The following variables are provided to generate the most optimal design and configuration of the VBF, the orientation of each of the filter elements is a function of: (1) the effective facing width or depth of filter element (X1); (2) the depth of the flange of the filter housing (Y1); and (3) the angle formed between the lateral axis of the filter element and the flange of the housing, shown as angle a1 (3000) in FIG. 4A. As further illustrated in FIGS. 4A-4B, the streamlined curve is generated as a 2D curve on the plane of "XOY" by the mathematical equation of y = f(x). As shown in the graph, the graph for the function y = f(x) starts from coordinate (0,0) and ends at coordinate (X1,Y1) and within the x value range x(0, X), the streamlined curve is at least a first order derivable curve depicting a certain rate of change based on the input variables. In addition, three groups of equations (or functions) are relevant to the streamlined curved design, as noted below:

$$\text{Equation group (1) } y = C_1 x^2,$$

where $C_1$ is a coefficient dependent on the variables X1 and Y1;

$$\text{Equation group (2) } y = e^{C_2 x},$$

where $C_2$ is a coefficient dependent on the variables X1 and Y1;

$$\text{Equation group (3) } y = R - (R^2 - x^2)^{1/2},$$

where R is the radius of a circle dependent on the variables X1 and Y1.

Equation group (1) $y = C_1 x^2$ controls and generates the minimum size of streamlined curve (shown in FIGS. 4A-4B and 4) for the function y = f(x)min.

In this embodiment, the CFD-based streamlined curved design-or the aerodynamic design at the intake side-is based on the minimum size of the streamlined curve having a minimum curvature path measured along the radius of the curvature and thereby improving flow patterns of the airflow in and around the various filter elements during usage of the VBF and preventing the generation of sudden large, localized acceleration of the airflow at the air intake side of the VBF. The minimum CFD-based curvature ensures that the airflow can run past this support without generating an extra separate flow layer attached on this surface until the airflow reaches the filter elements. According to the above results and law of similarity applied in the field of fluid dynamics, equation group (1) provides a low amplification value for nominal airflow within the VBF.

Equation group (3) $y = R - (R^2 - x^2)^{1/2}$ controls and generates the maximum size of streamlined curve (shown in FIG. 4, y = f(x)max).

In this embodiment, the CFD-based streamlined curved design, the aerodynamic design at the intake side based on the maximum size of the streamlined curve, having a maximum curvature path measured along the radius of the curvature, improves flow patterns of the airflow in and around the various filter elements during usage of the VBF and prevents the generation of sudden large localized acceleration of the airflow at the air intake side of the VBF. The maximum CFD-based curvature avoids an oversized stagnant area for the airflow and prevents any unwanted local acceleration (or any sudden changes in the velocity gradients) when airflow reaches the filter elements of the VBF.

As further illustrated in FIGS. 4A-4B, the various configurations and design options for the streamlined curved design and configuration for front supports of the VBF are controlled and generated by using two of the above groups of equations. CFD simulations are conducted to evaluate the effectiveness of streamlined curve functions. As illustrated in FIG. 4B, the shaded area between the y = f(x)max and y=f(x)min shows the curvature range between the maximum size and the minimum size of the streamlined generated curves.

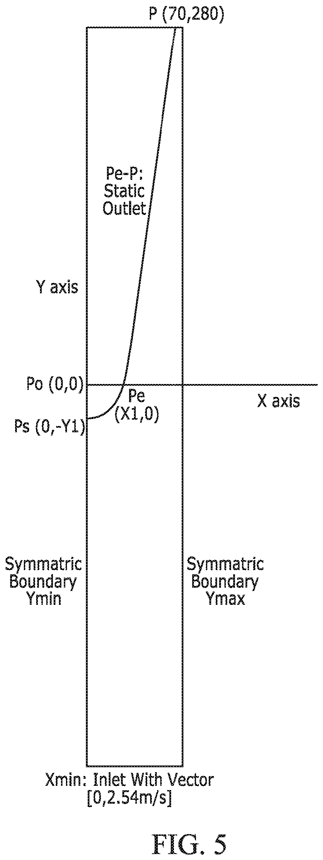

FIG. 5 illustrates the 2D CFD domain used for analyzing the streamlined curves' performance simulation for a VBF (4V-Bank) for a certain value of the variable X1 (30 mm) as disclosed herein.

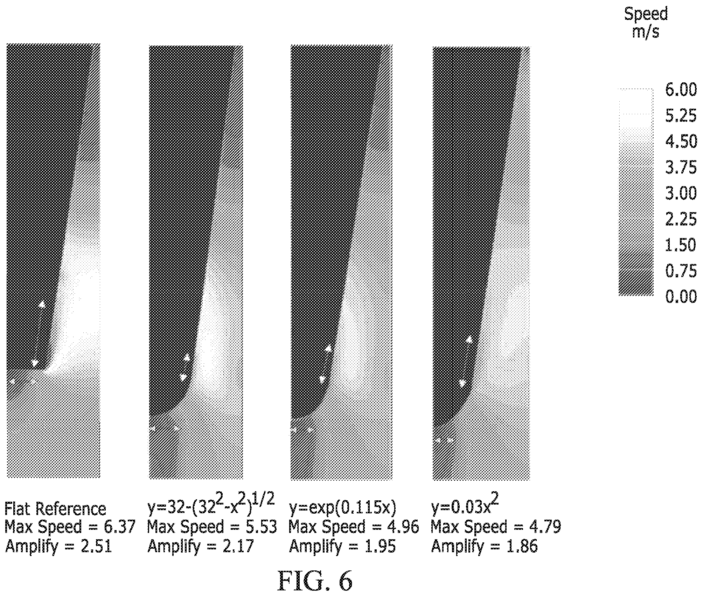

To illustrate the CFD domain for the performance of the streamlined curved VBF, an embodiment of the VBF filter 592 x 592 x 292 mm with 4V-Banks under flow rate of 3400 m3/h is used wherein X1 = 30 mm. The calculation domain for the function X[0,75], Y[-300, 280] is provided in units of millimeters. Ymin and Ymax are the symmetric boundaries for the graph generated (and as shown in FIGS. 4A-4B and 5). Xmin is a constant inlet with a velocity vector of [0, 2.54] in units of meter per second. Line Pe-P is a static outlet of calculation domain. The streamlined curve generated from the CFD simulation is shown from Ps(0, -Y1) to Pe(X1, 0) in FIG. 5, wherein the ideal amplify value (1.67) is defined as the maximum airspeed divided by the constant inlet speed. As further illustrated, FIG. 6 shows the comparison of the different curve scenarios for the streamlined curve-shaped design and the arrangement of the filter elements for a 4VBF disclosed herein.

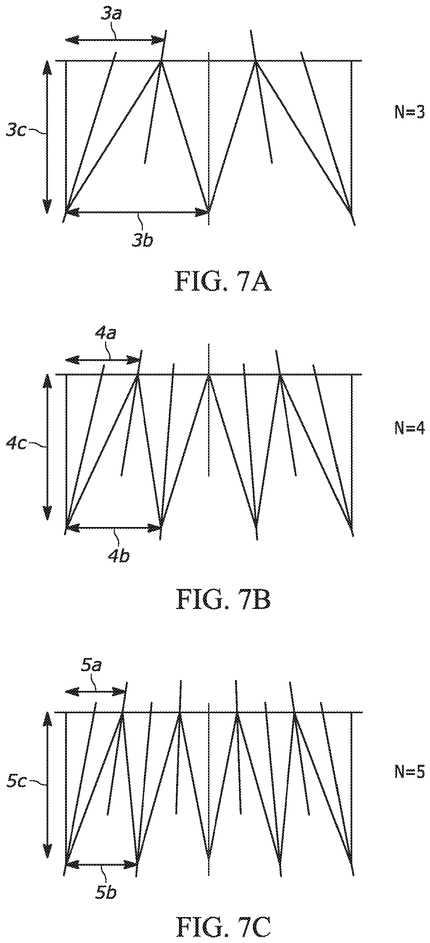

In yet another aspect of the present disclosure, a VBF comprises a CFD-based streamlined curved design at the air intake and having a certain arrangement and orientation of the filter elements, the orientation being a function of the number of filter elements and the size of the VBF housing (as further illustrated in FIG. 7). For instance, the depth of frame (as shown in FIG. 7) of the VBF is at least equal to (or greater than) 250 mm. A variable N is then defined which represents the number of V-shaped filter elements within the VBF. The filter elements along with the CFD-based streamlined curved designs at the air intake side are arranged in a certain configuration for maximizing the airflow efficiency, the configuration for maximizing the airflow efficiency being a function of the number of filter elements and the size of the housing, as further discussed below.

At the upstream side of the VBF, the length (e.g., 5a in FIG. 7 for N = 5) of a certain filter element for optimum configuration for the filter inlet side of the filter housing is calculated by dividing the difference between a width of a frame of the filter housing and a width of the flange multiplied by two by the number of V-shaped filter element (N) (as shown in the equation below):

Width of the Frame - 2 x Width of the Flange
N (No. of V-shaped Filter Elements)

At the downstream side, the length (e.g., 5b in FIG. 7 for N = 5) of a certain filter element for optimum a configuration for the filter outlet side of the filter housing is calculated by dividing the difference between the width of the frame of the filter housing and the width of the flange multiplied by two by the number of V-shaped filter elements minus one (N-1):

Width of the Frame - 2 x Width of the Flange
N - 1 (No. of V-shaped Filter Elements minus one)

Based on the above equations, the streamlined curved shapes (along with the filter elements) can be arranged for efficient airflow performance in order to achieve lower pressure drop and lower energy consumption during usage of the filter.

As shown in FIG. 7, (N + 1) division points are formed at the upstream side and (N) division points are formed at the downstream side of the VBF. By connecting points one by one, a central axis of each V-Bank comprising at least two filter elements from the plurality of the filter elements are formed within the VBF, wherein the central axis of each V-Bank is also the central line passing through the streamlined curves of the front support structures and forming the angular relationship between the various filter elements within the filter housing.

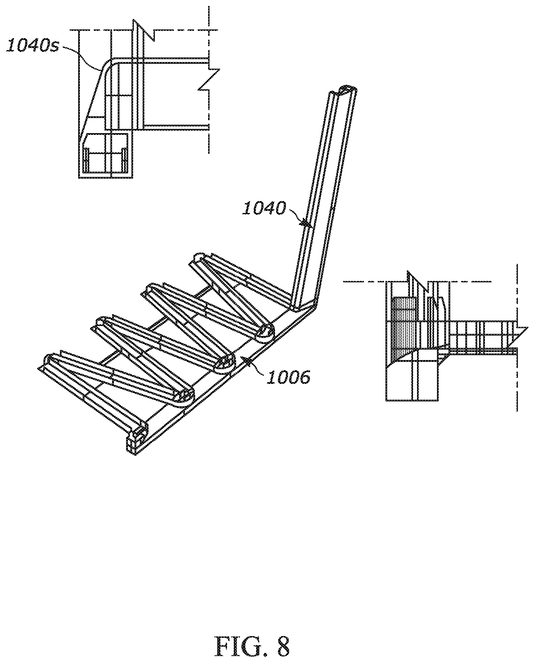

FIG. 8 illustrates the edge-shaped design to induce air into the filter frame housing of the VBF (4V-Bank) disclosed herein. As illustrated, the VBF comprises two types of curve-like shapes for the edge of the filter frame housing in order to induce the air into the filter frame and within the CFD-based streamlined curved design at the intake side. The VBF housing along with the specific arrangement of the filter elements-streamlined curved shapes that are oriented according to the arrangement of the filter elements- precludes sudden large localized acceleration of the flow at the air intake side. The VBF further improves flow patterns of the airflow in and around the various filter elements during usage of the VBF and prevents the generation of sudden large localized acceleration of the airflow at the air intake side of the VBF.

In yet another aspect of the present disclosure, in a 4V-Bank 592 x 592 x 292 mm VBF, the first curved segment of the front support is generated from the equation $y = 0.034x^2$ in units of millimeters. The second curved segment is generated from the equation $y = 24.92 - (24.92 - x^2)^{1/2}$, wherein the front support is at an angle of 83.5 degrees. The middle front support is generated from the equation $y = 0.031x^2$, wherein the front support is at an angle of 90 degrees.

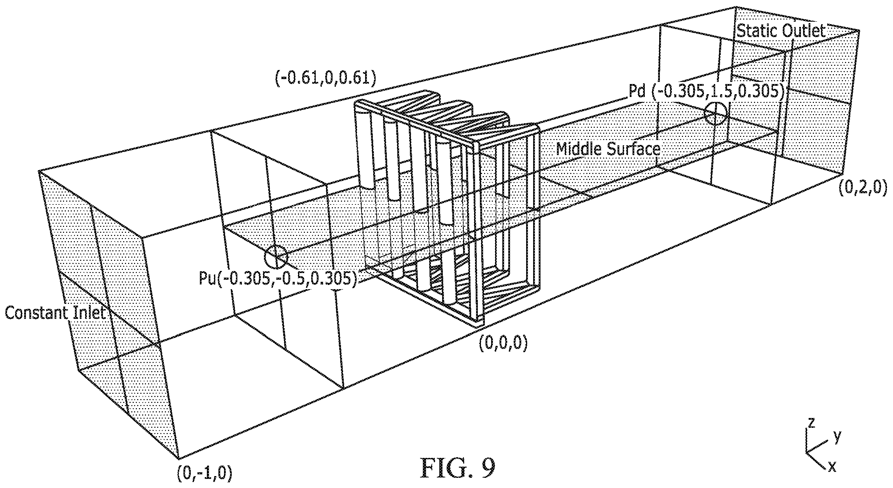

In yet another aspect of the present disclosure, the CFD simulation shows the analysis of flow through the filter arrangement under varying configuration and geometries of the VBF (also shown in Table 1 and Table 2 below). A calculation domain (as illustrated in FIG. 9) is built to simulate the standard test rig's performance on pressure drop and to visualize the velocity field within the domain. The range of the domain is designated as X[- 0.61, 0], Y[-1, 2], Z[0, 0.61] in units of meters. The facing surface of a filter or the air intake side is located at Y = 0 m.

As illustrated in FIG. 9, Point Pu(-0.305, -0.5, 0.305) is used to monitor the pressure in front of a filter. Point Pd(-0.305, 1.5, 0.305) is used to monitor the pressure at the downstream side of a filter. The pressure difference of these two points represents the pressure drop of a working filter. The surface of Ymin provides a constant flow rate of 3400 m3/h and the surface of Ymax is a static outlet of this calculation domain. Horizontal middle surface provides the position to generate speed contour for comparison. In order to match the calculation with actual test pressure drop values and save computing resources, unified blocks with power law resistance properties are built to simulate the pressure drop behavior of filter elements, the coefficients of mentioned power law equation is generated by a pressure drop match between actual test and simulation results.

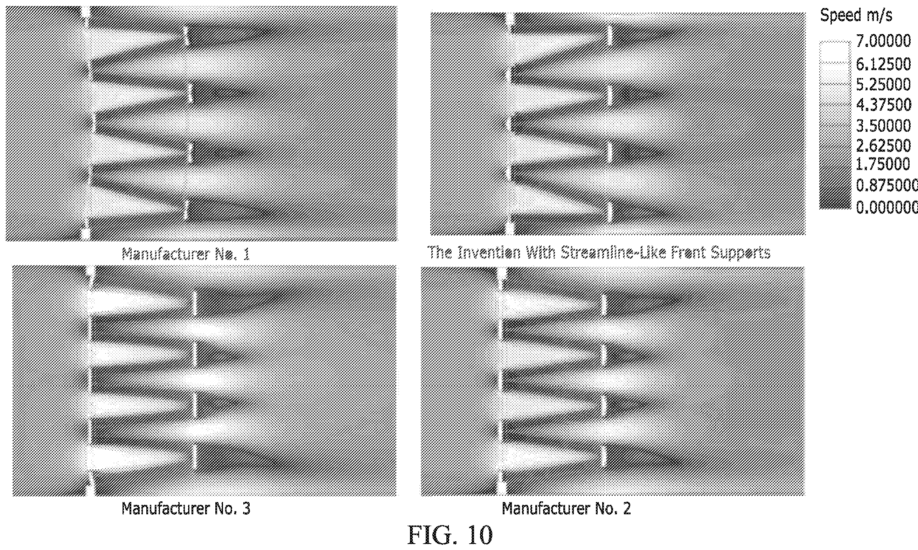

In yet another aspect of the present disclosure, the pressure drop of each VBF is the key performance metric to evaluate in each scenario of the CFD simulation. For instance, even if a certain embodiment of the VBF doesn't have the narrowest flange width for optimization (thereby influencing the maximum flow speed appearing on the surface), the streamlined curved design still works well with any nominal flow-leading to the lowest pressure drop performance and shortest stagnant area length at the downstream side of the VBF housing and the smallest stagnant area in front of the front support structures. FIG. 10 illustrates the various speed contours (four scenarios) of the airflow based on CFD simulation of the VBF (4V-Bank) disclosed herein (also shown in Table 1 below):

TABLE 1: COMPARISON OF VBF CFD SIMULATION RESULTS

| VBF Type | Effective Width Front Support [mm] | Effective Width Back Support [mm] | Pressure Drop [Pu - Pd, Pa] | Real Tested Pressure drops Regression at ISO ePM1 58% [Pa] | Max Speed [m/s] |
|---|---|---|---|---|---|
| This Invention | 55-58 | 55 | 65.0 | 64 | 7.1 |
| Manufacturer No.1 | 50 | 50 | 66.0 | 65 | 6.5 |
| Manufacturer No.2 | 55 | 55 | 72.5 | 71 | 7.3 |

(continued)

| VBF Type | Effective Width Front Support [mm] | Effective Width Back Support [mm] | Pressure Drop [Pu - Pd, Pa] | Real Tested Pressure drops Regression at ISO ePM1 58% [Pa] | Max Speed [m/s] |
|---|---|---|---|---|---|
| Manufacturer No.3 | 65 | 65 | 79.1 | 77 | 8.3 |

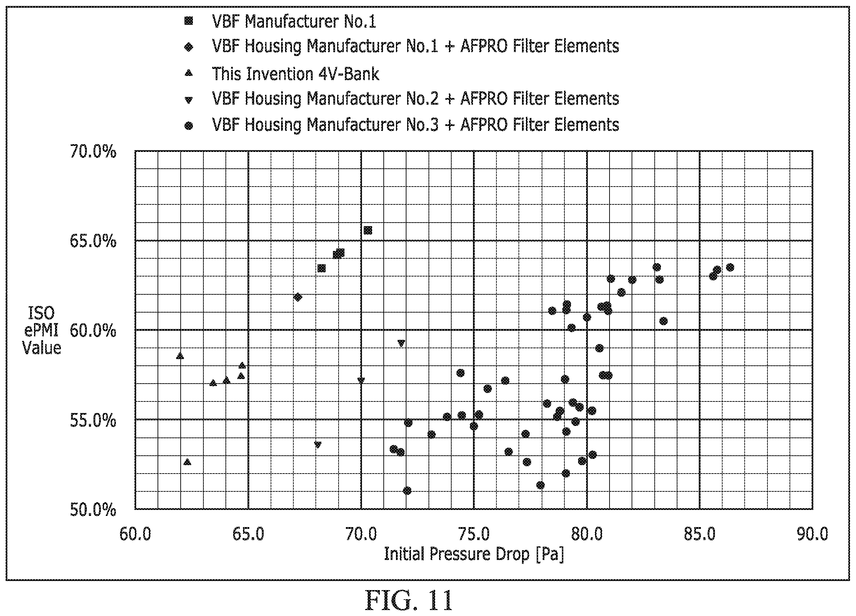

A comparison of a preferred embodiment of the present disclosure is provided with an empty frame performance without any filter elements (as shown in Table 2). Another comparison of a preferred embodiment of the present disclosure is provided with different VBF housings with the filter elements (as shown in FIG. 11).

TABLE 2. TEST RIG PRESSURE PERFORMANCE WITHOUT FILTER ELEMENTS UNDER A FLOW RATE OF 3400 CUBE METERS PER HOUR

| VBF Housing Type | Pressure Drop [Pa] |
|---|---|
| This Invention_4V-Bank, 592 x 592 x 292 mm | 16 |
| Manufacturer No.1_4V-Bank, 592 x 592 x 296 mm | 20 |
| Manufacturer No.2_4V-Bank, 592 x 592 x 292 mm | 22 |
| Manufacturer No.3_4V-Bank, 592 x 592 x 292 mm | 32 |

## Claims

1.  A filter assembly comprising:

    a housing (1002) including a pair of opposing side panels (1006, 1008);
    a pair of end channels (1040) wherein each end channel (1040) is contiguous with and extends between the opposing side panels (1006, 1008);
    a plurality of end caps (1060) wherein each end cap (1060) is contiguous with and extends between the opposing side panels (1006, 1008);
    a plurality of back support members each connected to the ends of the opposing side panels (1006, 1008); and
    a plurality of filter elements (1004) wherein each filter element (1004) is contiguous with and extends between the opposing side panels (1006, 1008);
    wherein the plurality of filter elements (1004) are arranged to define a plurality of vee pairs (2001, 2002, 2003, 2004) such that each vee pair (2001, 2002, 2003, 2004) include a pair of filter elements (1004);
    wherein each of the opposing side panels (1006, 1008) includes a front portion having an outer edge and a side panel contoured surface (1006s, 1008s) extending from the outer edge to an inner edge;
    wherein each end channel (1040) has a first edge (1040a) and an end channel contoured surface (1040s) extending from the first edge (1040a) to a second edge (1040b) of the end channel (1040);
    wherein each end cap (1060) has a first edge and an end cap contoured surface (1060s) extending from the first edge of the end cap (1060) to a second edge of the end cap (1060);
    wherein each end cap contoured surface (1060s) comprises a curvature that is defined by at least two curves, wherein each curve has a different control equation from the other curve;
    wherein each filter element (1004) has a lateral axis extending through the filter element (1004) from the front portion to the back support such that the lateral axis is disposed at an orientation relative to a flow direction (100) of an airflow through the housing (1002) such that the lateral axis of each filter element (1004) is non-parallel with respect to the lateral axis of each of the other filter element (1004); and
    wherein a bisecting centerline (2001c, 2002c, 2003c, 2004c) is defined between the lateral axis of each filter element (1004) of the vee pair (2001, 2002, 2003, 2004); and
    wherein the bisecting centerline (2001c, 2002c, 2003c, 2004c) of each vee pair (2001, 2002, 2003, 2004) is oriented non-parallel with respect to the bisecting centerline (2001c, 2002c, 2003c, 2004c) of each other vee pair (2001, 2002, 2003, 2004) such that the lateral axes of the pair of filter elements (1004) of the vee pair (2001, 2002, 2003, 2004) covered by one of the end caps (1060) are disposed at a different angle relative to the flow direction (100) of the airflow; and
    wherein the control equation's coefficients for each curve defining the end cap contoured surface (1060s) are dependent on the angle of the lateral axis of one of the filter elements (1004) at which the filter element (1004) is disposed relative to the flow direction (100).

2. The filter assembly of claim 1, wherein at least one of:

   - the front portions of the side panels (1006, 1008) and the end channels (1040) cooperatively define a filter inlet side;
   - the plurality of back support members connected to the opposing side panels (1006, 1008) define a filter outlet side;
   - each end channel contoured surface (1040s) comprises a 1st curve; the side panel contoured surface (1006s, 1008s) comprises a 2nd curve; and
   - the end cap contoured surface (1060s) has a curvature that is preferably generated from a CFD flow optimization program.

3. The filter assembly of claim 1 or 2, wherein the contoured surfaces (1060s) of the plurality of end caps (1060) comprise:

   a first end cap contoured surface defined by a first curvature that is formed by joining end points of a $3^{rd}$ curve and a $4^{th}$ curve, wherein the control equation of curvature of the $3^{rd}$ curve is different from the control equation of curvature of the $4^{th}$ curve, wherein the $3^{rd}$ curve and the $4^{th}$ curve are preferably generated from a CFD flow optimization program;
   a second end cap contoured surface defined by a second curvature that is formed by joining end points of a $5^{th}$ curve and a $6^{th}$ curve, wherein the control equation of curvature of the $5^{th}$ curve is different from the control equation of curvature of the $6^{th}$ curve, wherein the $5^{th}$ curve and the $6^{th}$ curve are preferably generated from a CFD flow optimization program; and
   a third end cap contoured surface defined by a third curvature that is formed by joining end points of a $7^{th}$ curve and a $8^{th}$ curve, wherein the control equation of curvature of the $7^{th}$ curve is different from the control equation of curvature of the $8^{th}$ curve, wherein the $7^{th}$ curve and the $8^{th}$ curve are preferably generated from a CFD flow optimization program, and
   optionally, wherein the first curvature and third curvature are mirror images of each other about a plane of symmetry disposed midway between the first and the third curvatures.

4. The filter assembly of any previous claim, wherein the contoured surfaces (1006s, 1008s, 1040s, 1060s) at the filter inlet side ensures that the airflow can move past a certain pre-determined point at the filter inlet side without generating any separate flow layer until the airflow reaches the plurality of filter elements (1004).

5. The filter assembly of any previous claim, wherein orientation of each of the filter elements (1004) is a function of the following variables:

   (a) a depth of the filter element (1004);
   (b) a depth of a flange of the filter housing (1002); and
   (c) an angle formed between the lateral axis of the filter element (1004) and the flange of the housing (1002).

6. The filter assembly of any previous claim, wherein the curvature of each end cap contoured surface (1060s) is optimized to improve flow patterns of the airflow in and around the various filter elements (1004) by averaging the flow velocity through the plurality of filter elements (1004) during use.

7. The filter assembly of any previous claim, wherein the contoured surfaces (1006s, 1008s, 1040s, 1060s) at the filter inlet side prevents the generation of large localized acceleration of the airflow.

8. The filter assembly of any previous claim, wherein the end cap and end channel contoured surfaces (1060s, 1040s) at the filter inlet side in conjunction with the orientation of the filter elements (1004) reduces the maximum velocity of the airflow exiting the filter housing (1002) at the filter outlet side.

9. The filter assembly of any previous claim, wherein the curvature of the end cap contoured surface (1060s):

   - further comprises a minimum curvature value generated by the equation $y = C_1 x^2$ wherein the coefficient $C_1$ is a function of (1) the effective facing width of a filter element (X1) and (2) the depth of the flange (Y1) of the filter housing (1002); and/or

- further comprises a maximum curvature value generated by the equation $y = R - (R^2 - x^2)^{1/2}$ wherein the coefficient R is a function of (1) the effective facing width of a filter element (X1) and (2) the depth of the flange (Y1); and/or

- lies in a range from a minimum curvature value generated by the equation $y = C_1 x^2$ to a maximum curvature value generated by the equation $y = R - (R^2 - x^2)^{1/2}$, wherein the coefficients $C_1$ and $R$ are functions of (1) the effective facing width of a filter element (X1) and (2) the depth of the flange (Y1); and/or

- is generated from a flow optimization program as a first order derivable curve depicting a certain rate of change based on certain input variables.

10. The filter assembly of any previous claim, wherein at least one of:

- a configuration for the filter inlet side of the filter housing is calculated by dividing the difference between a width of a frame of the filter housing and a width of the flange multiplied by two by the number of V-shaped filter element (N), in accordance with the equation

$$\frac{Width\ of\ Frame - 2\ x\ Width\ of\ Flange}{N\ (No.of\ V-shaped\ Filter\ Elements)},$$

and

- a configuration for the filter outlet side of the filter housing is calculated by dividing the difference between the width of the frame of the filter housing and the width of the flange multiplied by two by the number of V-shaped filter elements minus one (N-1), in accordance with the equation

$$\frac{Width\ of\ Frame - 2\ x\ Width\ of\ Flange}{N - 1\ (No.\ of\ V-shaped\ Filter\ Elements\ minus\ one)}.$$

11. A method of manufacturing a filter assembly, comprising:

providing a housing (1002) including a pair of opposing side panels (1006, 1008), wherein each of the opposing side panels (1006, 1008) includes a front portion having an outer edge and a side panel contoured surface (1006s, 1008s) extending from the outer edge to an inner edge;

connecting a plurality of back support members each connected to the ends of the opposing side panels (1006, 1008);

connecting a pair of end channels (1040) to the opposing side panels (1006, 1008) such that each end channel (1040) is contiguous with and extends between the opposing side panels (1006, 1008), wherein each end channel (1040) has a first edge and an end channel contoured surface (1040s) extending from the first edge to a second edge of the end channel (1040);

connecting a plurality of end caps (1060) to the opposing side panels (1006, 1008) such that each end cap (1060) is contiguous with and extends between the opposing side panels (1006, 1008), wherein each end cap (1060) has a first edge and an end cap contoured surface (1060s) extending from the first edge of the end cap (1060) to a second edge of the end cap (1060) and wherein each end cap contoured surface (1060s) is defined by at least two curves, wherein each curve has a different control equation from the other curve;

connecting a plurality of filter elements (1004) to the opposing side panels (1006, 1008) such that each filter element (1004) is contiguous with and extends between the opposing side panels (1006, 1008), wherein the plurality of filter elements (1004) are arranged to define a plurality of vee pairs (2001, 2002, 2003, 2004) such that each vee pair (2001, 2002, 2003, 2004) include a pair of filter elements (1004);

orienting each filter element (1004) such that (1) a lateral axis extending through the filter element (1004) from the front portion to the back support is disposed non-parallel with respect to the lateral axis of each of the other filter element (1004); and (2) a bisecting centerline (2001c, 2002c, 2003c, 2004c) defined between the lateral axis of each filter element (1004) of the vee pair (2001, 2002, 2003, 2004) is oriented non-parallel with respect to the bisecting centerline (2001c, 2002c, 2003c, 2004c) of each other vee pair (2001, 2002, 2003, 2004) such that the lateral axes of the pair of filter elements (1004) of the vee pair (2001, 2002, 2003, 2004) covered by one of the end caps (1060) are disposed at a different angle relative to the flow direction (100) of the airflow, and wherein the control equation's coefficients for each curve defining the curvature of the end cap contoured surface (1060s) are dependent on the angle of the lateral axis of one of the filter elements (1004) at which the filter element (1004) is disposed relative to the flow direction (100); and

optionally, wherein the method comprises manufacturing a filter assembly of any of the claims 1 - 10.

12. The method of claim 11, further comprising computing a curvature of the end cap contoured surface (1060s) based on a CFD flow optimization program.

13. The method of claim 11 or 12, comprising generating, preferably from a CFD flow optimization program, the contoured surfaces (1060s) of the plurality of end caps (1060) comprising:

a first end cap contoured surface defined by a first curvature that is formed by joining end points of a 3rd curve and a 4th curve, wherein the control equation of curvature of the 3rd curve is different from the control equation of curvature of the 4th curve, wherein the 3rd curve and the 4th curve are preferably generated from a CFD flow optimization program;

a second end cap contoured surface defined by a second curvature that is formed by joining end points of a 5th curve and a 6th curve, wherein the control equation of curvature of the 5th curve is different from the control equation of curvature of the 6th curve, wherein the 5th curve and the 6th curve are preferably generated from a CFD flow optimization program; and

a third end cap contoured surface defined by a third curvature that is formed by joining end points of a 7th curve and a 8th curve, wherein the control equation of curvature of the 7th curve is different from the control equation of curvature of the 8th curve, wherein the 7th curve and the 8th curve are preferably generated from a CFD flow optimization program, and

optionally, wherein the first curvature and third curvature are mirror images of each other about a plane of symmetry disposed midway between the first and the third curvatures.

14. The method of any of the claims 11-13, comprising at least one of:

- determining the curvature of each of the contoured surfaces (1006s, 1008s, 1040s, 1060s) at a filter inlet side such that the airflow can move past a certain pre-determined point at the filter inlet side without generating any separate flow layer until the airflow reaches the plurality of filter elements (1004);
- determining an orientation of each of the filter elements (1004) as a function of the following variables:

(a) a depth of the filter element (1004);
(b) a depth of the flange of the filter housing (1002); and
(c) an angle formed between the lateral axis of the filter element (1004) and the flange of the housing (1002); and

- optimizing the curvature of the contoured surface (1060s) for each end cap (1060) to improve flow patterns of the airflow in and around the various filter elements (1004) by averaging the flow velocity through the filter elements (1004) during use.

15. The method of any of the claims 11-14, comprising at least one of:

- determining the contoured surfaces (1006s, 1008s, 1040s, 1060s) at the filter inlet side such that the generation of large localized acceleration of the airflow is prevented;
- determining the contoured surfaces (1006s, 1008s, 1040s, 1060s) at the filter inlet side in conjunction with the orientation of the filter elements (1004) such that the maximum velocity of the airflow exiting the filter housing (1002) at a filter outlet side is reduced.

**Patentansprüche**

1. Filteranordnung, umfassend:

ein Gehäuse (1002), einschließlich eines Paars gegenüberliegender Seitenwände (1006, 1008);
ein Paar Endkanäle (1040), wobei jeder Endkanal (1040) an die gegenüberliegenden Seitenwände (1006, 1008) angrenzt und sich zwischen diesen erstreckt;
eine Vielzahl von Endkappen (1060), wobei jede Endkappe (1060) an die gegenüberliegenden Seitenwände (1006, 1008) angrenzt und sich zwischen diesen erstreckt;
eine Vielzahl von hinteren Stützgliedern, die jeweils mit den Enden der gegenüberliegenden Seitenwände (1006, 1008) verbunden sind; und

eine Vielzahl von Filterelementen (1004), wobei jedes Filterelement (1004) an die gegenüberliegenden Seitenwände (1006, 1008) angrenzt und sich zwischen diesen erstreckt;

wobei die Vielzahl von Filterelementen (1004) angeordnet sind, um eine Vielzahl von V-Paaren (2001, 2002, 2003, 2004) zu definieren, sodass jedes V-Paar (2001, 2002, 2003, 2004) ein Paar Filterelemente (1004) einschließt;

wobei jede der gegenüberliegenden Seitenwände (1006, 1008) einen vorderen Abschnitt einschließt, der eine Außenkante und eine konturierte Seitenwandoberfläche (1006s, 1008s), die sich von der Außenkante zu einer Innenkante erstreckt, aufweist;

wobei jeder Endkanal (1040) eine erste Kante (1040a) und eine konturierte Endkanaloberfläche (1040s), die sich von der ersten Kante (1040a) zu einer zweiten Kante (1040b) des Endkanals (1040) erstreckt, aufweist;

wobei jede Endkappe (1060) eine erste Kante und eine konturierte Endkappenoberfläche (1060s), die sich von der ersten Kante der Endkappe (1060) zu einer zweiten Kante der Endkappe (1060) erstreckt, aufweist;

wobei jede konturierte Endkappenoberfläche (1060s) eine Krümmung umfasst, die durch mindestens zwei Kurven definiert ist, wobei jede Kurve eine von der anderen Kurve unterschiedliche Steuergleichung aufweist;

wobei jedes Filterelement (1004) eine Querachse, die sich durch das Filterelement (1004) hindurch von dem vorderen Abschnitt zu der hinteren Stütze erstreckt, aufweist, sodass die Querachse in einer Ausrichtung relativ zu einer Strömungsrichtung (100) einer Luftströmung durch das Gehäuse (1002) hindurch eingerichtet ist, sodass die Querachse jedes Filterelements (1004) nicht parallel in Bezug auf die Querachse jedes der anderen Filterelemente (1004) ist; und

wobei eine halbierende Mittellinie (2001c, 2002c, 2003c, 2004c) zwischen der Querachse jedes Filterelements (1004) des V-Paars (2001, 2002, 2003, 2004) definiert ist; und

wobei die halbierende Mittellinie (2001c, 2002c, 2003c, 2004c) jedes V-Paars (2001, 2002, 2003, 2004) nicht parallel in Bezug auf die halbierende Mittellinie (2001c, 2002c, 2003c, 2004c) jedes anderen V-Paars (2001, 2002, 2003, 2004) ausgerichtet ist, sodass die Querachsen des Paars Filterelemente (1004) des V-Paars (2001, 2002, 2003, 2004), das durch eine der Endkappen (1060) abgedeckt wird, in einem unterschiedlichen Winkel relativ zu der Strömungsrichtung (100) der Luftströmung eingerichtet sind; und

wobei die Koeffizienten der Steuergleichung für jede Kurve, die die konturierte Endkappenoberfläche (1060s) definiert, von dem Winkel der Querachse eines der Filterelemente (1004) abhängig sind, in dem das Filterelement (1004) relativ zu der Strömungsrichtung (100) eingerichtet ist.

2. Filteranordnung nach Anspruch 1, wobei mindestens eines zutrifft von:

- die vorderen Abschnitte der Seitenwände (1006, 1008) und die Endkanäle (1040) definieren gemeinsam eine Filtereinlassseite;

- die Vielzahl von hinteren Stützgliedern, die mit den gegenüberliegenden Seitenwänden (1006, 1008) verbunden sind, definieren eine Filterauslassseite;

- jede konturierte Endkanaloberfläche (1040s) umfasst eine 1. Kurve; die konturierte Seitenwandoberfläche (1006s, 1008s) umfasst eine 2. Kurve; und

- die konturierte Endkappenoberfläche (1060s) weist eine Krümmung auf, die vorzugsweise aus einem CFD-Strömungsoptimierungsprogramm erzeugt wird.

3. Filteranordnung nach Anspruch 1 oder 2, wobei die konturierten Oberflächen (1060s) der Vielzahl von Endkappen (1060) umfassen:

eine erste konturierte Endkappenoberfläche, die durch eine erste Krümmung definiert ist, die durch ein Zusammenfügen von Endpunkten einer 3. Kurve und einer 4. Kurve ausgebildet ist, wobei sich die Steuergleichung der Krümmung der 3. Kurve von der Steuergleichung der Krümmung der 4. Kurve unterscheidet, wobei die 3. Kurve und die 4. Kurve vorzugsweise aus einem CFD-Strömungsoptimierungsprogramm erzeugt werden;

eine zweite konturierte Endkappenoberfläche, die durch eine zweite Krümmung definiert ist, die durch das Zusammenfügen von Endpunkten einer 5. Kurve und einer 6. Kurve ausgebildet ist, wobei sich die Steuergleichung der Krümmung der 5. Kurve von der Steuergleichung der Krümmung der 6. Kurve unterscheidet, wobei die 5. Kurve und die 6. Kurve vorzugsweise aus einem CFD-Strömungsoptimierungsprogramm erzeugt werden; und

eine dritte konturierte Endkappenoberfläche, die durch eine dritte Krümmung definiert ist, die durch das Zusammenfügen von Endpunkten einer 7. Kurve und einer 8. Kurve ausgebildet ist, wobei sich die Steuergleichung der Krümmung der 7. Kurve von der Steuergleichung der Krümmung der 8. Kurve unterscheidet, wobei die 7. Kurve und die 8. Kurve vorzugsweise aus einem CFD-Strömungsoptimierungsprogramm erzeugt werden und

wobei die erste Krümmung und die dritte Krümmung optional Spiegelbilder voneinander um eine Symmetrieebene, die auf halbem Wege zwischen der ersten und der dritten Krümmung eingerichtet ist, sind.

4. Filteranordnung nach einem der vorstehenden Ansprüche, wobei die konturierten Oberflächen (1006s, 1008s, 1040s, 1060s) an der Filtereinlassseite sicherstellen, dass sich die Luftströmung an einem gewissen zuvor bestimmten Punkt an der Filtereinlassseite ohne ein Erzeugen einer beliebigen separaten Strömungsschicht vorbeibewegen kann, bis die Luftströmung die Vielzahl von Filterelementen (1004) erreicht.

5. Filteranordnung nach einem der vorstehenden Ansprüche, wobei die Ausrichtung jedes der Filterelemente (1004) eine Funktion der folgenden Variablen ist:

   (a) einer Tiefe des Filterelements (1004);
   (b) einer Tiefe eines Flanschs des Filtergehäuses (1002); und
   (c) eines Winkels, der zwischen der Querachse des Filterelements (1004) und dem Flansch des Gehäuses (1002) ausgebildet ist.

6. Filteranordnung nach einem der vorstehenden Ansprüche, wobei die Krümmung jeder konturierten Endkappenoberfläche (1060s) optimiert ist, um Strömungsmuster der Luftströmung in und um die verschiedenen Filterelemente (1004) herum durch eine Mittelwertbildung der Strömungsgeschwindigkeit durch die Vielzahl der Filterelemente (1004) hindurch während einer Verwendung zu verbessern.

7. Filteranordnung nach einem der vorstehenden Ansprüche, wobei die konturierten Oberflächen (1006s, 1008s, 1040s, 1060s) an der Filtereinlassseite die Erzeugung einer großen lokalen Beschleunigung der Luftströmung verhindern.

8. Filteranordnung nach einem der vorstehenden Ansprüche, wobei die konturierten Endkappen- und Endkanaloberflächen (1060s, 1040s) an der Filtereinlassseite in Zusammenhang mit der Ausrichtung der Filterelemente (1004) die maximale Geschwindigkeit der Luftströmung, die das Filtergehäuse (1002) verlässt, an der Filterauslassseite verringern.

9. Filteranordnung nach einem der vorstehenden Ansprüche, wobei die Krümmung der konturierten Endkappenoberfläche (1060s):

   - ferner einen minimalen Krümmungswert, der durch die Gleichung $y = C_1 x^2$ erzeugt wird, umfasst, wobei der Koeffizient $C_1$ eine Funktion (1) der effektiven Stirnbreite eines Filterelements (X1) und (2) der Tiefe des Flanschs (Y1) des Filtergehäuses (1002) ist; und/oder
   - ferner einen maximalen Krümmungswert, der durch die Gleichung $y = R - (R^2 - x^2)^{1/2}$ erzeugt wird, umfasst, wobei der Koeffizient $R$ eine Funktion (1) der effektiven Stirnbreite eines Filterelements (X1) und (2) der Tiefe des Flanschs (Y1) ist; und/oder
   - in einem Bereich von einem minimalen Krümmungswert, der durch die Gleichung $y = C_1 x^2$ erzeugt wird, zu einem maximalen Krümmungswert, der durch die Gleichung $y = R - (R^2 - x^2)^{1/2}$ erzeugt wird, liegt, wobei die Koeffizienten $C_1$ und $R$ Funktionen (1) der effektiven Stirnbreite eines Filterelements (X1) und (2) der Tiefe des Flanschs (Y1) sind; und/oder
   - aus einem Strömungsoptimierungsprogramm als eine ableitbare Kurve erster Ordnung erzeugt wird, die eine gewisse Änderungsrate basierend auf gewissen Eingabevariablen darstellt.

10. Filteranordnung nach einem der vorstehenden Ansprüche, wobei mindestens eines zutrifft von:

   - eine Konfiguration für die Filtereinlassseite des Filtergehäuses wird durch ein Teilen des Unterschieds zwischen einer Breite eines Rahmens des Filtergehäuses und einer Breite des Flanschs multipliziert mit zwei durch die Anzahl von V-förmigen Filterelementen (N) berechnet, gemäß der Gleichung

$$\frac{\textit{Breite des Rahmens} - 2\ \textit{x Breite des Flanschs}}{\textit{N (Anzahl von V-förmigen Filterelementen)}},$$

   und

- eine Konfiguration für die Filterauslassseite des Filtergehäuses wird durch das Teilen des Unterschieds zwischen der Breite des Rahmens des Filtergehäuses und der Breite des Flanschs multipliziert mit zwei durch die Anzahl von V-förmigen Filterelementen minus eins (N-1) berechnet, gemäß der Gleichung

$$\frac{\textit{Breite des Rahmens} - 2 \, x \, \textit{Breite des Flanschs}}{N - 1 \, (\textit{Anzahl von V-förmigen Filterelementen minus eins})} .$$

11. Verfahren zum Herstellen einer Filteranordnung, umfassend:

Bereitstellen eines Gehäuses (1002), einschließlich eines Paars gegenüberliegender Seitenwände (1006, 1008), wobei jede der gegenüberliegenden Seitenwände (1006, 1008) einen vorderen Abschnitt einschließt, der eine Außenkante und eine konturierte Seitenwandoberfläche (1006s, 1008s), die sich von der Außenkante zu einer Innenkante erstreckt, aufweist;
Verbinden einer Vielzahl von hinteren Stützgliedern, die jeweils mit den Enden der gegenüberliegenden Seitenwände (1006, 1008) verbunden sind;
Verbinden eines Paars Endkanäle (1040) mit den gegenüberliegenden Seitenwänden (1006, 1008), sodass jeder Endkanal (1040) an die gegenüberliegenden Seitenwände (1006, 1008) angrenzt und sich zwischen diesen erstreckt, wobei jeder Endkanal (1040) eine erste Kante und eine konturierte Endkanaloberfläche (1040s), die sich von der ersten Kante zu einer zweiten Kante des Endkanals (1040) erstreckt, aufweist;
Verbinden einer Vielzahl von Endkappen (1060) mit den gegenüberliegenden Seitenwänden (1006, 1008), sodass jede Endkappe (1060) an die gegenüberliegenden Seitenwände (1006, 1008) angrenzt und sich zwischen diesen erstreckt, wobei jede Endkappe (1060) eine erste Kante und eine konturierte Endkappenoberfläche (1060s), die sich von der ersten Kante der Endkappe (1060) zu einer zweiten Kante der Endkappe (1060) erstreckt, aufweist und wobei jede konturierte Endkappenoberfläche (1060s) durch mindestens zwei Kurven definiert ist, wobei jede Kurve eine von der anderen Kurve unterschiedliche Steuergleichung aufweist;
Verbinden einer Vielzahl von Filterelementen (1004) mit den gegenüberliegenden Seitenwänden (1006, 1008), sodass jedes Filterelement (1004) an die gegenüberliegenden Seitenwände (1006, 1008) angrenzt und sich zwischen diesen erstreckt, wobei die Vielzahl von Filterelementen (1004) angeordnet sind, um eine Vielzahl von V-Paaren (2001, 2002, 2003, 2004) zu definieren, sodass jedes V-Paar (2001, 2002, 2003, 2004) ein Paar Filterelemente (1004) einschließt;
Ausrichten jedes Filterelements (1004), sodass (1) eine Querachse, die sich durch das Filterelement (1004) hindurch von dem vorderen Abschnitt zu der hinteren Stütze erstreckt, nicht parallel in Bezug auf die Querachse jedes der anderen Filterelemente (1004) eingerichtet ist; und (2) eine halbierende Mittellinie (2001c, 2002c, 2003c, 2004c), die zwischen den Querachsen jedes Filterelements (1004) des V-Paars (2001, 2002, 2003, 2004) definiert ist, nicht parallel in Bezug auf die halbierende Mittellinie (2001c, 2002c, 2003c, 2004c) jedes anderen V-Paars (2001, 2002, 2003, 2004) ausgerichtet ist, sodass die Querachsen des Paars Filterelemente (1004) des V-Paars (2001, 2002, 2003, 2004), das durch eine der Endkappen (1060) abgedeckt wird, in einem unterschiedlichen Winkel relativ zu der Strömungsrichtung (100) der Luftströmung eingerichtet sind, und wobei die Koeffizienten der Steuergleichung für jede Kurve, die die Krümmung der konturierten Endkappenoberfläche (1060s) definiert, von dem Winkel der Querachse eines der Filterelemente (1004) abhängig sind, in dem das Filterelement (1004) relativ zu der Strömungsrichtung (100) eingerichtet ist; und
wobei das Verfahren optional das Herstellen einer Filteranordnung nach einem der Ansprüche 1 bis 10 umfasst.

12. Verfahren nach Anspruch 11, ferner umfassend ein Berechnen einer Krümmung der konturierten Endkappenoberfläche (1060s) basierend auf einem CFD-Strömungsoptimierungsprogramm.

13. Verfahren nach Anspruch 11 oder 12, umfassend das Erzeugen, vorzugsweise aus einem CFD-Strömungsoptimierungsprogramm, der konturierten Oberflächen (1060s) der Vielzahl von Endkappen (1060), umfassend:

eine erste konturierte Endkappenoberfläche, die durch eine erste Krümmung definiert ist, die durch das Zusammenfügen von Endpunkten einer 3. Kurve und einer 4. Kurve ausgebildet ist, wobei sich die Steuergleichung der Krümmung der 3. Kurve von der Steuergleichung der Krümmung der 4. Kurve unterscheidet, wobei die 3. Kurve und die 4. Kurve vorzugsweise aus einem CFD-Strömungsoptimierungsprogramm erzeugt werden;
eine zweite konturierte Endkappenoberfläche, die durch eine zweite Krümmung definiert ist, die durch das Zusammenfügen von Endpunkten einer 5. Kurve und einer 6. Kurve ausgebildet ist, wobei sich die Steuergleichung der Krümmung der 5. Kurve von der Steuergleichung der Krümmung der 6. Kurve unterscheidet, wobei die 5. Kurve und die 6. Kurve vorzugsweise aus einem CFD-Strömungsoptimierungsprogramm erzeugt werden;

und eine dritte konturierte Endkappenoberfläche, die durch eine dritte Krümmung definiert ist, die durch das Zusammenfügen von Endpunkten einer 7. Kurve und einer 8. Kurve ausgebildet ist, wobei sich die Steuergleichung der Krümmung der 7. Kurve von der Steuergleichung der Krümmung der 8. Kurve unterscheidet, wobei die 7. Kurve und die 8. Kurve vorzugsweise aus einem CFD-Strömungsoptimierungsprogramm erzeugt werden und

wobei die erste Krümmung und die dritte Krümmung optional Spiegelbilder voneinander um eine Symmetrieebene, die auf halbem Wege zwischen der ersten und der dritten Krümmung eingerichtet ist, sind.

**14.** Verfahren nach einem der Ansprüche 11 bis 13, umfassend mindestens eines von:

- Bestimmen der Krümmung jeder der konturierten Oberflächen (1006s, 1008s, 1040s, 1060s) an einer Filtereinlassseite, sodass sich die Luftströmung an einem gewissen zuvor bestimmten Punkt an der Filtereinlassseite ohne das Erzeugen einer beliebigen separaten Strömungsschicht vorbeibewegen kann, bis die Luftströmung die Vielzahl von Filterelementen (1004) erreicht;
- Bestimmen einer Ausrichtung jedes der Filterelemente (1004) als eine Funktion der folgenden Variablen:

(a) einer Tiefe des Filterelements (1004);
(b) einer Tiefe des Flanschs des Filtergehäuses (1002); und
(c) eines Winkels, der zwischen der Querachse des Filterelements (1004) und dem Flansch des Gehäuses (1002) ausgebildet ist; und

- Optimieren der Krümmung der konturierten Oberfläche (1060s) für jede Endkappe (1060), um Strömungsmuster der Luftströmung in und um die verschiedenen Filterelemente (1004) herum durch die Mittelwertbildung der Strömungsgeschwindigkeit durch die Filterelemente (1004) hindurch während der Verwendung zu verbessern.

**15.** Verfahren nach einem der Ansprüche 11 bis 14, umfassend mindestens eines von:

- Bestimmen der konturierten Oberflächen (1006s, 1008s, 1040s, 1060s) an der Filtereinlassseite, sodass die Erzeugung einer großen lokalen Beschleunigung der Luftströmung verhindert wird;
- Bestimmen der konturierten Oberflächen (1006s, 1008s, 1040s, 1060s) an der Filtereinlassseite in Zusammenhang mit der Ausrichtung der Filterelemente (1004), sodass die maximale Geschwindigkeit der Luftströmung, die das Filtergehäuse (1002) verlässt, an einer Filterauslassseite verringert wird.

**Revendications**

**1.** Ensemble filtre comprenant :

un boîtier (1002) comportant une paire de panneaux latéraux opposés (1006, 1008) ;
une paire de canaux d'extrémité (1040) dans lequel chaque canal d'extrémité (1040) est contigu aux panneaux latéraux opposés (1006, 1008) et s'étend entre eux ;
une pluralité de capuchons d'extrémité (1060) dans lequel chaque capuchon d'extrémité (1060) est contigu aux panneaux latéraux opposés (1006, 1008) et s'étend entre eux ;
une pluralité d'organes de support arrière chacun relié aux extrémités des panneaux latéraux opposés (1006, 1008) ; et
une pluralité d'éléments de filtre (1004) dans lequel chaque élément de filtre (1004) est contigu aux panneaux latéraux opposés (1006, 1008) et s'étend entre eux ;
dans lequel la pluralité d'éléments de filtre (1004) sont agencés de manière à définir une pluralité de paires de V (2001, 2002, 2003, 2004) de telle sorte que chaque paire de V (2001, 2002, 2003, 2004) comporte une paire d'éléments de filtre (1004) ;
dans lequel chacun des panneaux latéraux opposés (1006, 1008) comporte une partie avant ayant un bord extérieur et une surface profilée de panneau latéral (1006s, 1008s) s'étendant du bord extérieur à un bord intérieur ;
dans lequel chaque canal d'extrémité (1040) a un premier bord (1040a) et une surface profilée de canal d'extrémité (1040s) s'étendant du premier bord (1040a) à un second bord (1040b) du canal d'extrémité (1040) ;
dans lequel chaque capuchon d'extrémité (1060) a un premier bord et une surface profilée de canal d'extrémité (1060s) s'étendant du premier bord du capuchon d'extrémité (1060) à un second bord du capuchon d'extrémité (1060) ;

dans lequel chaque surface profilée de capuchon d'extrémité (1060s) comprend une courbure qui est définie par au moins deux courbes, dans lequel chaque courbe a une équation de contrôle différente de celle de l'autre courbe ;

dans lequel chaque élément de filtre (1004) a un axe latéral s'étendant à travers l'élément de filtre (1004) de la partie avant au support arrière de telle sorte que l'axe latéral est disposé selon une orientation relativement à une direction d'écoulement (100) d'un écoulement d'air à travers le boîtier (1002) de telle sorte que l'axe latéral de chaque élément de filtre (1004) n'est pas parallèle par rapport à l'axe latéral de chacun de l'autre élément de filtre (1004) ; et

dans lequel une ligne médiane bissectrice (2001c, 2002c, 2003c, 2004c) est définie entre l'axe latéral de chaque élément de filtre (1004) de la paire de V (2001, 2002, 2003, 2004) ; et

dans lequel la ligne centrale bissectrice (2001c, 2002c, 2003c, 2004c) de chaque paire de V (2001, 2002, 2003, 2004) est orientée de manière non parallèle par rapport à la ligne centrale bissectrice (2001c, 2002c, 2003c, 2004c) de chaque autre paire de V (2001, 2002, 2003, 2004) de telle sorte que les axes latéraux de la paire d'éléments de filtre (1004) de la paire de V (2001, 2002, 2003, 2004) couverte par l'un parmi les capuchons d'extrémité (1060) sont disposés selon un angle différent relativement à la direction d'écoulement (100) de l'écoulement d'air ; et

dans lequel les coefficients de l'équation de contrôle pour chaque courbe définissant la surface profilée de capuchon d'extrémité (1060s) dépendent de l'angle de l'axe latéral de l'un parmi les éléments de filtre (1004) au niveau duquel l'élément de filtre (1004) est disposé relativement à la direction d'écoulement (100).

2. Ensemble filtre selon la revendication 1, dans lequel au moins l'un parmi :

- les parties avant des panneaux latéraux (1006, 1008) et les canaux d'extrémité (1040) définissent conjointement un côté d'entrée de filtre ;
- la pluralité d'organes de support arrière reliés aux panneaux latéraux opposés (1006, 1008) définit un côté de sortie de filtre ;
- chaque surface profilée de canal d'extrémité (1040s) comprend une 1$^{re}$ courbe ; la surface profilée de panneau latéral (1006s, 1008s) comprend une 2$^e$ courbe ; et
- la surface profilée de capuchon d'extrémité (1060s) a une courbure qui est de préférence générée à partir d'un programme d'optimisation d'écoulement CFD.

3. Ensemble filtre selon la revendication 1 ou 2, dans lequel les surfaces profilées (1060s) de la pluralité de capuchons d'extrémité (1060) comprennent :

une première surface profilée de capuchon d'extrémité définie par une première courbure qui est formée par la jonction de points d'extrémité d'une 3$^e$ courbe et d'une 4$^e$ courbe, dans lequel l'équation de contrôle de courbure de la 3$^e$ courbe est différente de l'équation de contrôle de courbure de la 4$^e$ courbe, dans lequel la 3$^e$ courbe et la 4$^e$ courbe sont de préférence générées à partir d'un programme d'optimisation d'écoulement CFD ;

une deuxième surface profilée de capuchon d'extrémité définie par une deuxième courbure qui est formée par la jonction de points d'extrémité d'une 5$^e$ courbe et d'une 6$^e$ courbe, dans lequel l'équation de contrôle de courbure de la 5$^e$ courbe est différente de l'équation de contrôle de courbure de la 6$^e$ courbe, dans lequel la 5$^e$ courbe et la 6$^e$ courbe sont de préférence générées à partir d'un programme d'optimisation d'écoulement CFD ; et

une troisième surface profilée de capuchon d'extrémité définie par une troisième courbure qui est formée par la jonction de points d'extrémité d'une 7$^e$ courbe et d'une 8$^e$ courbe, dans lequel l'équation de contrôle de courbure de la 7$^e$ courbe est différente de l'équation de contrôle de courbure de la 8$^e$ courbe, dans lequel la 7$^e$ courbe et la 8$^e$ courbe sont de préférence générées à partir d'un programme d'optimisation d'écoulement CFD, et éventuellement, dans lequel la première courbure et la troisième courbure sont des images miroirs l'une de l'autre autour d'un plan de symétrie disposé à mi-chemin entre la première et la troisième courbures.

4. Ensemble filtre selon l'une quelconque revendication précédente, dans lequel les surfaces profilées (1006s, 1008s, 1040s, 1060s) au niveau du côté d'entrée de filtre garantissent que l'écoulement d'air peut se déplacer au-delà d'un certain point prédéterminé au niveau du côté d'entrée de filtre sans générer l'une quelconque couche d'écoulement séparée jusqu'à ce que l'écoulement d'air atteigne la pluralité d'éléments de filtre (1004).

5. Ensemble filtre selon l'une quelconque revendication précédente, dans lequel l'orientation de chacun des éléments de filtre (1004) est une fonction des variables suivantes :

(a) une profondeur de l'élément de filtre (1004) ;
(b) une profondeur d'une bride du boîtier de filtre (1002) ; et
(c) un angle formé entre l'axe latéral de l'élément de filtre (1004) et la bride du boîtier (1002).

6. Ensemble filtre selon l'une quelconque revendication précédente, dans lequel la courbure de chaque surface profilée de capuchon d'extrémité (1060s) est optimisée de manière à améliorer des schémas d'écoulement de l'écoulement d'air dans les divers éléments de filtre (1004) et autour d'eux en établissant une moyenne de la rapidité d'écoulement à travers la pluralité d'éléments de filtre (1004) au cours de l'utilisation.

7. Ensemble filtre selon l'une quelconque revendication précédente, dans lequel les surfaces profilées (1006s, 1008s, 1040s, 1060s) au niveau du côté d'entrée de filtre empêchent la génération d'une grande accélération localisée de l'écoulement d'air.

8. Ensemble filtre selon l'une quelconque revendication précédente, dans lequel les surfaces profilées de capuchon d'extrémité et de canal d'extrémité (1060s, 1040s) au niveau du côté d'entrée de filtre en conjonction avec l'orientation des éléments de filtre (1004) réduisent la rapidité maximale de l'écoulement d'air sortant du boîtier de filtre (1002) au niveau du côté de sortie de filtre.

9. Ensemble filtre selon l'une quelconque revendication précédente, dans lequel la courbure de la surface profilée de capuchon d'extrémité (1060s) :

   - comprend en outre une valeur de courbure minimale générée par l'équation $y = C_1 x^2$ dans lequel le coefficient $C_1$ est une fonction de (1) la largeur de face effective d'un élément de filtre (X1) et (2) la profondeur de la bride (Y1) du boîtier de filtre (1002) ; et/ou
   - comprend en outre une valeur de courbure maximale générée par l'équation $y = R - (R^2 - x^2)^{1/2}$ dans lequel le coefficient $R$ est une fonction de (1) la largeur de face effective d'un élément de filtre (X1) et (2) la profondeur de la bride (Y1) ; et/ou
   - se trouve dans une plage allant d'une valeur de courbure minimale générée par l'équation $y = C_1 x^2$ à une valeur de courbure maximale générée par l'équation $y = R - (R^2 - x^2)^{1/2}$, dans lequel les coefficients $C_1$ et $R$ sont des fonctions de (1) la largeur de face effective d'un élément de filtre (X1) et (2) la profondeur de la bride (Y1) ; et/ou
   - est générée à partir d'un programme d'optimisation d'écoulement en guise de première courbe dérivable du premier ordre décrivant un certain taux de variation en fonction de certaines variables d'entrée.

10. Ensemble filtre selon l'une quelconque revendication précédente, dans lequel au moins l'une parmi :

   - une configuration pour le côté d'entrée de filtre du boîtier de filtre est calculée en divisant la différence entre une largeur d'un cadre du boîtier de filtre et une largeur de la bride multipliée par deux par le nombre d'élément de filtre en forme de V (N), selon l'équation

$$\frac{Largeur\ de\ cadre - 2\ x\ largeur\ de\ bride}{N\ (nombre\ d'éléments\ de\ filtre\ en\ forme\ de\ V)};$$

   et
   - une configuration pour le côté de sortie de filtre du boîtier de filtre est calculée en divisant la différence entre la largeur du cadre du boîtier de filtre et la largeur de la bride multipliée par deux par le nombre d'éléments de filtre en forme de V moins un (N-1), selon l'équation

$$\frac{Largeur\ de\ cadre - 2\ x\ largeur\ de\ bride}{N-1\ (nombre\ d'éléments\ de\ filtre\ en\ forme\ de\ V\ moins\ un)}$$

11. Procédé de fabrication d'un ensemble filtre, comprenant :

   la fourniture d'un boîtier (1002) comportant une paire de panneaux latéraux opposés (1006, 1008), dans lequel chacun des panneaux latéraux opposés (1006, 1008) comporte une partie avant ayant un bord extérieur et une surface profilée de panneau latéral (1006s, 1008s) s'étendant du bord extérieur à un bord intérieur ;
   la liaison d'une pluralité d'organes de support arrière chacun relié aux extrémités des panneaux latéraux opposés (1006, 1008) ;

la liaison d'une paire de canaux d'extrémité (1040) aux panneaux latéraux opposés (1006, 1008) de telle sorte que chaque canal d'extrémité (1040) est contigu aux panneaux latéraux opposés (1006, 1008) et s'étend entre eux, dans lequel chaque canal d'extrémité (1040) a un premier bord et une surface profilée de canal d'extrémité (1040s) s'étendant du premier bord à un second bord du canal d'extrémité (1040) ;

la liaison d'une pluralité de capuchons d'extrémité (1060) aux panneaux latéraux opposés (1006, 1008) de telle sorte que chaque capuchon d'extrémité (1060) est contigu aux panneaux latéraux opposés (1006, 1008) et s'étend entre eux, dans lequel chaque capuchon d'extrémité (1060) a un premier bord et une surface profilée de capuchon d'extrémité (1060s) s'étendant du premier bord du capuchon d'extrémité (1060) à un second bord du capuchon d'extrémité (1060) et dans lequel chaque surface profilée de capuchon d'extrémité (1060s) est définie par au moins deux courbes, dans lequel chaque courbe a une équation de contrôle différente de celle de l'autre courbe ;

la liaison d'une pluralité d'éléments de filtre (1004) aux panneaux latéraux opposés (1006, 1008) de telle sorte que chaque élément de filtre (1004) est contigu aux panneaux latéraux opposés (1006, 1008) et s'étend entre eux, dans lequel la pluralité d'éléments de filtre (1004) sont agencés de manière à définir une pluralité de paires de V (2001, 2002, 2003, 2004) de telle sorte que chaque paire de V (2001, 2002, 2003, 2004) comporte une paire d'éléments de filtre (1004) ;

l'orientation de chaque élément de filtre (1004) de telle sorte que (1) un axe latéral s'étendant à travers l'élément de filtre (1004) de la partie avant au support arrière est disposé de manière non parallèle par rapport à l'axe latéral de chacun de l'autre élément de filtre (1004) ; et (2) une ligne centrale bissectrice (2001c, 2002c, 2003c, 2004c) définie entre l'axe latéral de chaque élément de filtre (1004) de la paire de V (2001, 2002, 2003, 2004) est orientée de manière non parallèle par rapport à la ligne centrale bissectrice (2001c, 2002c, 2003c, 2004c) de chaque autre paire de V (2001, 2002, 2003, 2004) de telle sorte que les axes latéraux de la paire d'éléments de filtre (1004) de la paire de V (2001, 2002, 2003, 2004) couverte par l'un parmi les capuchons d'extrémité (1060) sont disposés selon un angle différent relativement à la direction d'écoulement (100) de l'écoulement d'air, et dans lequel les coefficients de l'équation de contrôle pour chaque courbe définissant la surface profilée de capuchon d'extrémité (1060s) dépendent de l'angle de l'axe latéral de l'un parmi les éléments de filtre (1004) au niveau duquel l'élément de filtre (1004) est disposé relativement à la direction d'écoulement (100) ; et

éventuellement, dans lequel le procédé comprend la fabrication d'un ensemble de filtre selon l'une quelconque des revendications 1 à 10.

12. Procédé selon la revendication 11, comprenant en outre le calcul d'une courbure de la surface profilée de capuchon d'extrémité (1060s) en fonction d'un programme d'optimisation d'écoulement CFD.

13. Procédé selon la revendication 11 ou 12, comprenant la génération, de préférence à partir d'un programme d'optimisation d'écoulement CFD, des surfaces profilées (1060s) de la pluralité de capuchons d'extrémité (1060) comprenant :

une première surface profilée de capuchon d'extrémité définie par une première courbure qui est formée par la jonction de points d'extrémité d'une 3e courbe et d'une 4e courbe, dans lequel l'équation de contrôle de courbure de la 3e courbe est différente de l'équation de contrôle de courbure de la 4e courbe, dans lequel la 3e courbe et la 4e courbe sont de préférence générées à partir d'un programme d'optimisation d'écoulement CFD ;
une deuxième surface profilée de capuchon d'extrémité définie par une deuxième courbure qui est formée par la jonction de points d'extrémité d'une 5e courbe et d'une 6e courbe, dans lequel l'équation de contrôle de courbure de la 5e courbe est différente de l'équation de contrôle de courbure de la 6e courbe, dans lequel la 5e courbe et la 6e courbe sont de préférence générées à partir d'un programme d'optimisation d'écoulement CFD ; et une troisième surface profilée de capuchon d'extrémité définie par une troisième courbure qui est formée par la jonction de points d'extrémité d'une 7e courbe et d'une 8e courbe, dans lequel l'équation de contrôle de courbure de la 7e courbe est différente de l'équation de contrôle de courbure de la 8e courbe, dans lequel la 7e courbe et la 8e courbe sont de préférence générées à partir d'un programme d'optimisation d'écoulement CFD, et éventuellement, dans lequel la première courbure et la troisième courbure sont des images miroirs l'une de l'autre autour d'un plan de symétrie disposé à mi-chemin entre la première et la troisième courbures.

14. Procédé selon l'une quelconque des revendications 11 à 13, comprenant au moins l'une parmi :

- la détermination de la courbure de chacune des surfaces profilées (1006s, 1008s, 1040s, 1060s) au niveau d'un côté d'entrée de filtre de telle sorte que l'écoulement d'air peut se déplacer au-delà d'un certain point prédéterminé au niveau du côté d'entrée de filtre sans générer l'une quelconque couche d'écoulement séparée jusqu'à ce que l'écoulement d'air atteigne la pluralité d'éléments de filtre (1004) ;
- la détermination d'une orientation de chacun des éléments de filtre (1004) en guise de fonction des variables suivantes :

(a) une profondeur de l'élément de filtre (1004) ;
(b) une profondeur de la bride du boîtier de filtre (1002) ; et
(c) un angle formé entre l'axe latéral de l'élément de filtre (1004) et la bride du boîtier (1002) ; et

- l'optimisation de la courbure de la surface profilée (1060s) pour chaque capuchon d'extrémité (1060) de manière à améliorer des schémas d'écoulement de l'écoulement d'air dans les divers éléments de filtre (1004) et autour d'eux en établissant une moyenne de la rapidité d'écoulement à travers les éléments de filtre (1004) au cours de l'utilisation.

**15.** Procédé selon l'une quelconque des revendications 11 à 14, comprenant au moins l'une parmi :

- la détermination des surfaces profilées (1006s, 1008s, 1040s, 1060s) au niveau du côté d'entrée de filtre de telle sorte que la génération d'une grande accélération localisée de l'écoulement d'air est empêchée ;
- la détermination des surfaces profilées (1006s, 1008s, 1040s, 1060s) au niveau du côté d'entrée de filtre en conjonction avec l'orientation des éléments de filtre (1004) de telle sorte que la rapidité maximale de l'écoulement d'air sortant du boîtier de filtre (1002) au niveau du côté de sortie de filtre est réduite.

FIG. 1

FIG. 2

FIG. 3

Y axis

Pleat
Element

Top View

y=f(x)

End Point (X1,Y1)

3000

<a1>

<Y1>

Flange

Start Point (0,0)

<X1>

X axis

FIG. 4A

Y axis

y=f(x)max

y=f(x)min

End Point
(X1,Y1)

<Y1>

Start Point (0,0)

<X1>

X axis

FIG. 4B

P (70,280)

Pe-P:
Static
Outlet

Y axis

Po (0,0)

X axis

Pe
(X1,0)

Ps (0,-Y1)

Symmatric
Boundary
Ymin

Symmatric
Boundary
Ymax

Xmin: Inlet With Vector
[0,2.54m/s]

FIG. 5

FIG. 6

FIG. 7A

N=3

FIG. 7B

N=4

FIG. 7C

N=5

FIG. 8

FIG. 9

Speed m/s
7.00000
6.12500
5.25000
4.37500
3.50000
2.62500
1.75000
0.875000
0.000000

Manufacturer No. 1

The Invention With Streamline-Like Front Supports

Manufacturer No. 3

Manufacturer No. 2

FIG. 10

FIG. 11

**EP 4 504 380 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112957835 A
- US 20090193773 A1
- US 20110277430 A1